(19) Europäisches Patentamt / European Patent Office / Office européen des brevets

(11) **EP 4 174 129 A1**

(12) **EUROPEAN PATENT APPLICATION**
published in accordance with Art. 153(4) EPC

(43) Date of publication:
**03.05.2023 Bulletin 2023/18**

(21) Application number: **21828033.7**

(22) Date of filing: **18.06.2021**

(51) International Patent Classification (IPC):
*C08L 21/00* $^{(2006.01)}$    *C08K 3/34* $^{(2006.01)}$
*C08L 15/00* $^{(2006.01)}$    *C08L 23/26* $^{(2006.01)}$

(52) Cooperative Patent Classification (CPC):
**C08K 3/34; C08L 15/00; C08L 21/00; C08L 23/26**

(86) International application number:
**PCT/JP2021/023251**

(87) International publication number:
**WO 2021/261406 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020 JP 2020108955**

(71) Applicant: ENEOS Corporation
Chiyoda-ku
Tokyo 100-8162 (JP)

(72) Inventors:
• **CHINO, Keisuke**
Tokyo 100-8162 (JP)
• **IWASAKI, Keitaro**
Tokyo 100-8162 (JP)
• **ASHIURA, Makoto**
Tokyo 100-8162 (JP)

(74) Representative: **Müller-Boré & Partner Patentanwälte PartG mbB Friedenheimer Brücke 21 80639 München (DE)**

(54) **RUBBER COMPOSITION AND CROSSLINKED RUBBER COMPOSITION**

(57)    A rubber composition, comprising:
an uncross-linked rubber having no hydrogen-bond cross-linkable moiety; and
at least one polymer component selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below and polymers (B) each of which contains a hydrogen-bond cross-linkable moiety and a covalent-bond cross-linking moiety in a side chain and has a glass-transition point of 25°C or below; wherein an amount of the polymer component contained is 0.01 to 200 parts by mass relative to 100 parts by mass of the uncross-linked rubber, and
the polymers (A) and the polymers (B) are each a reaction product of a maleic anhydride graft-modified thermoplastic polymer having a maleation ratio of 0.1 to 10% by mass and a cross-linkable compound.

EP 4 174 129 A1

**Description**

[Technical Field]

The present invention relates to a rubber composition and a cross-linked rubber composition.

[Background Art]

Conventionally, various types of rubber compositions have been developed to exhibit suitable properties according to the applications. For example, International Publication No. WO 2019/027022 (PTL 1) discloses a rubber composition comprising: a rubber having no hydrogen-bond cross-linkable moiety; at least one polymer component selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below and polymers (B) each of which contains a hydrogen-bond cross-linkable moiety and a covalent-bond cross-linking moiety in a side chain and has a glass-transition point of 25°C or below; and a clay, wherein a content of the polymer component is 0.01 to 300 parts by mass relative to 100 parts by mass of the rubber, and an amount of the clay contained is 20 parts by mass or less relative to 100 parts by mass of the polymer component. When cross-linked, the rubber composition described in Patent Document 1 can have a value of tan6 (0°C), which is an index of wet grip property, and a value of tan6 (60°C), which is an index of rolling resistance (fuel economy), at sufficient levels in a better-balanced manner, and is useful as, in particular, a material for tires or the like. However, such a rubber composition as described in Patent Document 1 still has room for improvement in that, after cross-linking, occurrence of oil bleeding is sufficiently prevented while a sufficiently low hardness is obtained, and moreover an excellent heat aging resistance is imparted.

[Citation List]

[Patent Literature]

[PTL 1] International Publication No. WO 2019/027022

[Summary of Invention]

[Technical Problem]

The present invention has been made in view of the problem of the conventional technique, and an object of the present invention is to provide a rubber composition that, after cross-linked (after vulcanization), can be sufficiently prevented from the occurrence of oil bleeding, while having a sufficiently low hardness, and moreover can exhibit an excellent heat aging resistance, as well as a cross-linked rubber composition that is a cross-linking reaction product of the above-described rubber composition.

[Solution to Problem]

The present inventors have conducted intensive studies to achieve the above-described object, and consequently have found that when a rubber composition comprising: an uncross-linked rubber having no hydrogen-bond cross-linkable moiety; and at least one polymer component selected from the group consisting of polymers (A) described later and polymers (B) described later, wherein an amount of the polymer component contained is 0.01 to 200 parts by mass relative to 100 parts by mass of the uncross-linked rubber, and the polymers (A) and the polymers (B) are each a reaction product of a maleic anhydride graft-modified thermoplastic polymer having a maleation ratio of 0. 1 to 10% by mass and a cross-linkable compound, is cross-linked (vulcanized), the cross-linked (vulcanized) rubber composition can be sufficiently prevented from the occurrence of oil bleeding, while having a sufficiently low hardness, and moreover can exhibit an excellent heat aging resistance. This finding has led to the completion of the present invention.

Specifically, a rubber composition of the present invention comprises:

an uncross-linked rubber having no hydrogen-bond cross-linkable moiety; and
at least one polymer component selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below and polymers (B) each of which contains a hydrogen-bond cross-linkable moiety and a covalent-bond cross-linking moiety in a side chain and has a glass-transition point of 25°C or below, wherein
an amount of the polymer component contained is 0.01 to 200 parts by mass relative to 100 parts by mass of the uncross-linked rubber, and
the polymers (A) and the polymers (B) are each a reaction product of a maleic anhydride graft-modified thermoplastic polymer having a maleation ratio of 0.1 to 10% by mass and a cross-linkable compound.

Meanwhile, a cross-linked rubber composition of the present invention is a cross-linking reaction product of the above-described rubber composition of the present invention and has a type A durometer hardness of 0 to 70, as measured under a temperature condition of $20\pm5$°C in accordance with JIS K6253-3: 2012.

[Advantageous Effects of Invention]

According to the present invention, it is possible to provide a rubber composition that, after cross-linked (after vulcanized), can be sufficiently prevented from the occurrence of oil bleeding, while having a sufficiently low hardness, and moreover can exhibit an excellent heat aging resistance, as well as a cross-linked rubber composition that is a cross-linking reaction product of the above-described rubber composition.

[Description of Embodiments]

Hereinafter, the present invention is described in detail with reference to preferred embodiments thereof.

(Rubber Composition)

A rubber composition of the present invention comprises: an uncross-linked rubber having no hydrogen-bond cross-linkable moiety; and at least one polymer component selected from the group consisting of the polymers (A) and the polymers (B); wherein an amount of the polymer component contained is 0.01 to 200 parts by mass relative to 100 parts by mass of the uncross-linked rubber, and the polymers (A) and the polymers (B) are each a reaction product of a maleic anhydride graft-modified thermoplastic polymer having a maleation ratio of 0.1 to 10% by mass and a cross-linkable compound. Hereinafter, each of the components is first described.

(Uncross-Linked Rubber)

The uncross-linked rubber according to the present invention is a rubber which has no hydrogen-bond cross-linkable moiety, and which is in an uncross-linked (unvulcanized) state. Note that, in such a rubber, "having no hydrogen-bond cross-linkable moiety" means that the rubber does not have a moiety for cross-linking by hydrogen bonding between rubber molecules (for example, diene-based rubber molecules when the rubber is a diene-based rubber) or with other components, and means that the rubber does not have a structural moiety that can form a cross-link by hydrogen bonding (for example, a group such as a hydroxyl group or a carbonyl group that can form a cross-link by hydrogen bonding or the like). In addition, "uncross-linked" in connection with such a rubber indicates that the rubber is in a state before cross-linking (vulcanization) by a reaction with a cross-linking agent for rubber (vulcanization agent) described later or the like. From such a viewpoint, an "uncross-linked rubber" indicates a rubber in a state of not being reacted with a cross-linking agent for rubber (vulcanization agent) (a rubber in a state before forming cross-linking with a cross-linking agent for rubber (vulcanization agent): an unvulcanized rubber). In addition, a "cross-linking agent for rubber" herein only needs to be capable of cross-linking (vulcanizing) the uncross-linked rubber, and is a concept including sulfur-based ones (sulfur-based cross-linking agents), as well as non-sulfur-based ones (non-sulfur-based cross-linking agents, for example, peroxide-based cross-linking agents and the like). Note that those which can be used as the "cross-linking agent for rubber" and the like are described later.
Preferred examples of such an uncross-linked rubber having no hydrogen-bond cross-linkable moiety include diene-based rubbers having no hydrogen-bond cross-linkable moiety, hydrogenated products of diene-based rubbers having no hydrogen-bond cross-linkable moiety, silicone-based rubbers having no hydrogen-bond cross-linkable moiety, chlorosulfonated polyethylene rubbers having no hydrogen-bond cross-linkable moiety, epichlorohydrin rubbers having no hydrogen-bond cross-linkable moiety, polysulfide rubbers having no hydrogen-bond cross-linkable moiety, fluororubbers having no hydrogen-bond cross-linkable moiety, and vinyl chloride-based rubbers having no hydrogen-bond cross-linkable moiety (however, such an uncross-linked rubber having no hydrogen-bond cross-linkable moiety excludes those corresponding to a "styrene block copolymer having no chemical-bond cross-linking moiety" and an "$\alpha$-olefin-based polymer having no chemical-bond cross-linking moiety" described later). One of these rubbers having no hydrogen-bond cross-linkable moiety may be used alone, or two or more thereof may be used in combination (as a blend).
Note that the diene-based rubbers having no hydrogen-bond cross-linkable moiety, the hydrogenated products of diene-based rubbers having no hydrogen-bond cross-linkable moiety, the silicone-based rubbers having no hydrogen-bond cross-linkable moiety, the chlorosulfonated polyethylene rubbers having no hydrogen-bond cross-linkable moiety, the epichlorohydrin rubbers having no hydrogen-bond cross-linkable moiety, polysulfide rubbers having no hydrogen-bond cross-linkable moiety, fluororubbers having no hydrogen-bond cross-linkable moiety, and vinyl chloride-based rubbers having no hydrogen-bond cross-linkable moiety which can be used as such an uncross-linked rubber are not particularly limited, and known ones can be used, as appropriate. For example, those described in International Publication No. WO 2019/027022 may be used, as appropriate. Note, however, that such an uncross-linked rubber having no hydrogen-bond cross-linkable moiety needs to be other than the "styrene block copolymer having no chemical-bond cross-linking moiety" and the "$\alpha$-olefin-based polymer having no chemical-bond cross-linking moiety" described later (in other words, such an uncross-linked rubber having no hydrogen-bond cross-linkable moiety is an uncross-linked rubber other than olefinic polymers having no hydrogen-bond cross-linkable moiety and styrene block copolymers having no hydrogen-bond cross-linkable moiety).

Such an uncross-linked rubber having no hydrogen-bond cross-linkable moiety is further preferably at least one selected from the group consisting of diene-based rubbers having no hydrogen-bond cross-linkable moiety and hydrogenated products thereof, and particularly preferably a diene-based rubber having no hydrogen-bond cross-linkable moiety. Note that the "diene-based rubber" preferably used as the uncross-linked rubber described herein may be any rubber containing a double bond in the molecular structure. For this reason, the "diene-based rubber" preferably used as the uncross-linked rubber described in the present specification is a concept including EPDM (ethylene-propylene-diene copolymer), butyl rubber (IIR), and the like as exemplified below. In addition, the "silicone-based rubber" in the present specification may be any rubber containing a siloxane structure.

The diene-based rubber which can be preferably used as such an uncross-linked rubber having no hydrogen-bond cross-linkable moiety may be any diene-based rubber having no hydrogen-bond cross-linkable moiety, and it is possible to use, as appropriate, a known diene-based rubber which can be used for the production of industrial rubber parts (preferably tires) (for example, a known diene-based rubber such as natural rubber (NR), isoprene rubber (IR), butadiene rubber (BR), 1,2-butadiene rubber, styrene-butadiene rubber (SBR), acrylonitrile-butadiene rubber (NBR), hydrogenated acrylonitrile-butadiene rubber, chloroprene rubber (CR), butyl rubber (IIR), brominated butyl rubber, chlorinated butyl rubber, or ethylene-propylene-diene rubber (EPDM)).

In particular, such a diene-based rubber is preferably natural rubber (NR), styrene-butadiene rubber (SBR), ethylene-propylene-diene rubber (EPDM), butadiene rubber (BR), acrylonitrile-butadiene rubber (NBR), chloroprene rubber (CR), butyl rubber (IIR), hydrogenated acrylonitrile-butadiene rubber, brominated butyl rubber, or chlorinated butyl rubber, more preferably NR, SBR, EPDM, IR, BR, NBR, CR, or IIR, further preferably NR, SBR, or EPDM, and particularly preferably EPDM, from the viewpoint that when the composition is used as a material for producing a rubber part for industrial use (preferably a tire, a belt, or a hose), a rubber part for industrial use (preferably a tire, a belt, or a hose) can be obtained with better performance. One of these diene-based rubbers may be used alone, or two or more thereof may be used in combination (as a blend).

In addition, the SBR which can be used as the diene-based rubber may be either an emulsion polymerization SBR (E-SBR) or a solution polymerization SBR (S-SBR). In addition, when a blend of the SBR with an additional diene-based rubber is used, it is preferable to use natural rubber, butadiene rubber, or both as the additional diene-based rubber. In addition, as such a diene-based rubber, a blended product of diene-based rubbers may be used in order to exhibit more optimal performance according to the application. As such a diene-based rubber, for example, it is preferable to use one containing 30 to 100% by mass of SBR from the viewpoint of using the composition as a material for forming a tread portion of a tire. In addition, it is preferable to use one containing 40 to 100% by mass of SBR from the viewpoint of using the composition as a material for forming a cap tread portion of a tire.

In addition, such an uncross-linked rubber having no hydrogen-bond cross-linkable moiety is more preferably SBR, CR, IIR, EPDM, millable silicone rubber, NR, IR, BR, NBR, hydrogenated acrylonitrile-butadiene rubber, brominated butyl rubber, or chlorinated butyl rubber, and more preferably SBR, IIR, EPDM, NR, hydrogenated acrylonitrile-butadiene rubber, brominated butyl rubber, or chlorinated butyl rubber from the viewpoints of versatility and performance. Note that one of these rubbers having no hydrogen-bond cross-linkable moiety may be used alone, or two or more thereof may be used as a mixture.

(Polymer Component)

The polymer component according to the present invention comprises at least one polymer selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below and polymers (B) each of which contains a hydrogen-bond cross-linkable moiety and a covalent-bond cross-linking moiety in a side chain and has a glass-transition point of 25°C or below.

In each of the polymers (A) and (B), the "side chain" refers to a side chain and a terminal of the polymer. In addition, "a side chain (a) containing a hydrogen-bond cross-linkable moiety having a carbonyl-containing group and/or a nitrogen-containing heterocycle" means that a carbonyl-containing group and/or a nitrogen-containing heterocycle (more preferably, a carbonyl-containing group and a nitrogen-containing heterocycle) serving as the hydrogen-bond cross-linkable moiety is chemically stably bonded (covalently bonded) to an atom (generally, a carbon atom) forming a main chain of the polymer. In addition, the "containing a hydrogen-bond cross-linkable moiety and a covalent-bond cross-linking moiety in a side chain" is a concept including a case where a side chain having a hydrogen-bond cross-linkable moiety (hereinafter, sometimes referred to as "side chain (a')" for convenience) and a side chain having a covalent-bond cross-linking moiety (hereinafter, sometimes referred to as "side chain (b)" for convenience) are both contained, so that a hydrogen-bond cross-linkable moiety and a covalent-bond cross-linking moiety are both contained in the side chains of a polymer, as well as a case where a side chain having both a hydrogen-bond cross-linkable moiety and a covalent-bond cross-linking moiety (a single side chain containing both a hydrogen-bond cross-linkable moiety and a covalent-bond cross-linking moiety therein: hereinafter, such a side chain is sometimes referred to as "side chain (c)" for convenience), so that both a hydrogen-bond cross-linkable moiety and a covalent-bond cross-linking moiety are contained in the side chain of a polymer.

Such a polymer component is more preferably at least one selected from the group consisting of polymers (B) each of which contains a hydrogen-bond cross-linkable moiety and a covalent-bond cross-linking moiety in a side chain and has a glass-transition point of 25°C or below from the viewpoint of further lowering the hardness.

Since the polymers (A) and (B) are each a reaction product of a maleic anhydride graft-modified thermoplastic polymer and a cross-linkable compound, the main chain of each of the polymers (A) and (B) (the type of the polymer forming the main chain portion) in such a polymer component is originated from the main chain of the maleic anhydride graft-modified thermoplastic polymer. Note that thermoplastic polymers forming main chain portions of the polymers (A) and (B) (main chains of maleic anhydride graft-modified thermoplastic polymers) are described later.

In addition, the glass-transition point of each of the polymers (A) and (B) is 25°C or below as described above. In the present invention, the "glass-transition point" is a glass-transition point measured by differential scanning calorimetry (DSC - Differential Scanning Calorimetry). Note that the measurement is conducted at a rate of temperature rise of 10°C/min. When the glass-transition point of such a polymer is 25°C or below, flexibility can be imparted within an ordinary temperature range of use (room temperature (25°C) or higher).

In addition, the polymers (A) and (B) have, as a side chain, at least one of a side chain (a) containing a hydrogen-bond cross-linkable moiety having a carbonyl-containing group and/or a nitrogen-containing heterocycle; a side chain (a') containing a hydrogen-bond cross-linkable moiety and a side chain (b) containing a covalent-bond cross-linking moiety; and a side chain (c) containing a hydrogen-bond cross-linkable moiety and a covalent-bond cross-linking moiety, as described above. Note that, in the present invention, the side chain (c) can also be regarded as a side chain functioning as a side chain (a') and also as a side chain (b). Each of the side chains is described below.

<Side Chain (a'): Side Chain Containing Hydrogen-Bond Cross-Linkable Moiety>

Such a side chain (a') containing a hydrogen-bond cross-linkable moiety may be any, and the structure thereof is not particularly limited, as long as the side chain has a group that can form a cross-link by hydrogen bonding (for example, a hydroxyl group, a hydrogen-bond cross-linkable moiety contained in the side chain (a) described later, or the like), and forms a hydrogen bond on the basis of the group. Here, the hydrogen-bond cross-linkable moiety is a moiety through which polymer molecules are cross-linked to each other by a hydrogen bond. Note that the cross-linkage by a hydrogen bond is formed only when there are a hydrogen acceptor (a group containing an atom containing lone pair electrons, or the like) and a hydrogen donor (a group having a hydrogen atom covalently bonded to an atom having a high electronegativity, or the like). Hence, when both a hydrogen acceptor and a hydrogen donor are not present in side chains of polymer molecules, no cross-linkage by a hydrogen bond is formed. For this reason, only when both a hydrogen acceptor and a hydrogen donor are present in side chains of polymer molecules, a hydrogen-bond cross-linkable moiety can be considered to be present in the system. Note that, in the present invention, if both a portion that can function as a hydrogen acceptor (for example, a carbonyl group or the like) and a portion that can function as a hydrogen donor (for example, a hydroxyl group or the like) are present in side chains of polymer molecules, the portion that can function as a hydrogen acceptor and the portion that can function as a donor of the side chains can be considered to be hydrogen-bond cross-linkable moieties.

The hydrogen-bond cross-linkable moiety in such a side chain (a') is more preferably the side chain (a) described later from the viewpoints of the formation of a stronger hydrogen bond and the like. Moreover, from the same viewpoints, the hydrogen-bond cross-linkable moiety in the side chain (a') is more preferably a hydrogen-bond cross-linkable moiety having a carbonyl-containing group and a nitrogen-containing heterocycle.

<Side Chain (a): Side Chain Containing Hydrogen-Bond Cross-Linkable Moiety Having Carbonyl-Containing Group and/or Nitrogen-Containing Heterocycle>

The side chain (a) containing a hydrogen-bond cross-linkable moiety having a carbonyl-containing group and/or a nitrogen-containing heterocycle may be any, as long as the side chain has a carbonyl-containing group and/or a nitrogen-containing heterocycle, and the other aspects of the structure are not particularly limited. The hydrogen-bond cross-linkable moiety more preferably has a carbonyl-containing group and a nitrogen-containing heterocycle.

The carbonyl-containing group is not particularly limited, as long as the group contains a carbonyl group. Specific examples thereof include amide, ester, imide, carboxy group, carbonyl group, thioester group, acid anhydride group, and the like. Note that each of the polymers (A) and (B) is a reaction product of a maleic anhydride graft-modified thermoplastic polymer and a cross-linkable compound in the present invention, and hence has a group derived from the "maleic anhydride group" of the maleic anhydride graft-modified thermoplastic polymer (for example, an ester group, a carbonyl group, an amide group, an imide group, a carboxy group, or the like, although the group varies depending on the type of the cross-linkable compound reacted). In addition, an unreacted and remaining acid anhydride group is a portion that can function as a hydrogen acceptor, and hence can function as a group forming a hydrogen-bond cross-linkable moiety.

In addition, when the side chain (a) has a nitrogen-containing heterocycle, the structure or the like of the nitrogen-containing heterocycle is not particularly limited, as long as the nitrogen-containing heterocycle is introduced to the side chain (a) directly or through an organic group. It is also possible to use, as the nitrogen-containing heterocycle, one containing a heteroatom other than a nitrogen atom, such as a sulfur atom, an oxygen atom, a phosphorus atom in the heterocycle, as long as the heterocycle contains a nitrogen atom. Note that such a nitrogen-containing heterocycle may have a substituent. Here, the use of the nitrogen-containing heterocycle in the side chain (a) is preferable because the heterocycle structure results in a stronger hydrogen bond forming the cross-linkage, so that the durability and impact resistance of the composition are improved. In addition, the nitrogen-containing heterocycle is preferably a 5-membered ring and/or a 6-membered ring from the viewpoint that stronger hydrogen bonding is formed and resistance to compression set and mechanical strength are further improved. In addition, the nitrogen-containing heterocycle may be one in which a nitrogen-containing heterocycle and a benzene ring are condensed or one in which nitrogen-containing heterocycles are condensed. As the nitrogen-containing heterocycle, a known one (for example, one described in paragraphs [0054] to [0067] of JP 5918878 B, one described in paragraphs [0035] to [0048] of Japanese Unexamined Patent Application Publication No. 2017-206604, or the like) can be used, as appropriate. Note that the nitrogen-containing heterocycle may have a substituent.

The nitrogen-containing heterocycle is preferably at least one selected from a triazole ring, an isocyanurate ring, a thiadiazole ring, a pyridine ring, an imidazole ring, a triazine ring, and a hydantoin ring each of which may have a substituent, and is preferably at least one selected from a triazole ring, an isocyanurate ring, a thiadiazole ring, a pyridine ring, an imidazole ring, and a hydantoin ring each of which may have a substituent, from the viewpoint of excellence in recyclability, compression set, hardness, and mechanical strengths (especially, tensile strength).

Examples of substituents the nitrogen-containing heterocycle may have include a hydroxyl group, an amino group, an imino group, a carboxy group, an isocyanate group, an epoxy group, an alkoxysilyl group, a thiol group (a mercapto group), and the like. It is also possible to use, as such a substituent, an alkyl group such as a methyl group, an ethyl group, an (iso)propyl group, or a hexyl group; an alkoxy group such as a methoxy group, an ethoxy group, or an (iso)propoxy group; a group consisting of a halogen atom such as a fluorine atom, a chlorine atom, a bromine atom, or an iodine atom; a cyano group; an amino group; an imino group; an aromatic hydrocarbon group; an ester group; an ether group; an acyl group; a thioether group; or the like. Moreover, the position of substitution with such a substituent is not particularly limited, and the number of the substituents is not limited, either.

In addition, when the side chain (a) contains both the above-described carbonyl-containing group and the above-described nitrogen-containing heterocycle, the carbonyl-containing group and the nitrogen-containing heterocycle may be introduced to the main chain as side chains different from each other, but are preferably introduced to the main chain as a single side chain in which the above-described carbonyl-containing group and the above-described nitrogen-containing heterocycle are linked to each other through another group. The side chain (a) may have a structure as described in paragraphs [0068] to [0081] of JP 5918878 B or the like.

In addition, such a side chain (a) is formed by a reaction between a maleic anhydride graft-modified thermoplastic polymer and a cross-linkable compound. As the cross-linkable compound used for forming such a side chain (a), it is preferable to use a compound capable of forming a hydrogen-bond cross-linkable moiety upon reaction with a maleic anhydride group (hereinafter sometimes simply referred to as "a compound that forms a hydrogen-bond cross-linkable moiety"). As the "compound that forms a hydrogen-bond cross-linkable moiety" which can be used as the cross-linkable compound, it is preferable to use a compound capable of introducing a nitrogen-containing heterocycle. As described above, it is preferable to use, as the cross-linkable compound, "a compound that forms a hydrogen-bond cross-linkable moiety (more preferably a compound capable of introducing a nitrogen-containing heterocycle)." The "compound that forms a hydrogen-bond cross-linkable moiety (more preferably the compound capable of introducing a nitrogen-containing heterocycle)" is, for example, preferably a compound having a substituent that reacts with a maleic anhydride group (for example, a hydroxyl group, a thiol group, an amino group, an imino group, or the like), and more preferably a compound having at least one of a hydroxyl group, an amino group, an imino group, and a thiol group. In addition, the compound having a substituent that reacts with a maleic anhydride group (more preferably a compound having at least one of a hydroxyl group, an amino group, an imino group, and a thiol group) is particularly preferably one having a nitrogen-containing heterocycle.

<Side Chain (b): Side Chain Containing Covalent-Bond Cross-Linking Moiety>

In the present specification, "a side chain (b) containing a covalent-bond cross-linking moiety" means that the side chain containing a moiety that cross-links molecules of a polymer forming a main chain by a covalent bond (a covalent-bond cross-linking moiety: for example, a moiety which can be formed by a reaction between a maleic anhydride group and a cross-linkable compound and in which polymer molecules are cross-linked by a chemically stable bond (covalent bond) such as at least one bond selected from the group consisting of amide, ester, and thioester, or the like). Note that the side chain (b) is a side chain containing a covalent-bond cross-linking moiety, but will be used as a side chain (c) described later when it has a covalent bonding moiety, and further has a group capable of hydrogen bonding, to form cross-linking between side chains by hydrogen bonding (note that when both a hydrogen donor and a hydrogen acceptor, which enable the formation of hydrogen bonding between side chains of molecules of the polymer, are not contained, for example, when only side chains simply containing ester groups (-COO-) are present in a system, the ester groups (-COO-) cannot form hydrogen bonding, especially, and hence such a group does not function as a hydrogen-bond cross-linkable moiety. Meanwhile, for example, when side chains of molecules of the polymer each contain a structure having both a moiety serving as a hydrogen donor in a hydrogen bond and a moiety serving as a hydrogen acceptor in the hydrogen bond as in the case of a carboxy group or a triazole ring, hydrogen bonding is formed between the side chains of the molecules of the polymer, and hence it can be said that hydrogen-bond cross-linkable moieties are contained. In addition, for example, when an ester group and a hydroxyl group are coexistent in side chains of molecules of the polymer and a hydrogen bond is formed by these groups between side chains, the moieties forming the hydrogen bond are regarded as the hydrogen-bond cross-linkable moieties. For this reason, a side chain (b) may sometimes be used as a side chain (c) depending on the structure itself of the side chain (b), the structure of the side chain (b) and the type of the substituent of another side chain, or the like). In addition, the "covalent-bond cross-linking moiety" herein is a moiety in which polymer molecules are cross-linked by a covalent bond.
The side chain (b) containing a covalent-bond cross-linking moiety is not particularly limited, and is preferably, for example, a side chain containing a covalent-bond cross-linking moiety formed by reacting a maleic anhydride graft-modified thermoplastic polymer; with a cross-linkable compound consisting of a compound that can form a covalent-bond cross-linking moiety upon reaction with a maleic anhydride group (functional group) (hereinafter sometimes referred to as "compound that forms a covalent-bond cross-linking moiety (compound that forms a covalent bond)"). The cross-linking in the covalent-bond cross-linking moiety of the side chain (b) is preferably formed by at least one bond selected from the group consisting of amide, ester, and thioester.
The "compound that forms a covalent-bond cross-linking moiety (compound that forms a covalent bond)" which can be used as the cross-linkable compound is preferably a compound having a substituent that reacts with a maleic anhydride group (for example, a hydroxyl group, a thiol group, an amino group, an imino group, or the like), and more preferably a compound having at least one of hydroxyl, amino, and imino groups. In addition, the compound having a substituent that reacts with a maleic anhydride group (more preferably a compound having at least one of hydroxyl, amino, and imino groups) is particularly preferably one having a nitrogen-containing heterocycle.
In addition, examples of the "compound that forms a covalent-bond cross-linking moiety (the compound that forms a covalent bond)" which can be used as the cross-linkable compound include polyamine compounds having two or more amino and/or imino groups in one molecule (when both amino and imino groups are present, the total number of these groups is two or more); polyol compounds having two or more hydroxyl groups in one molecule; polyisocyanate compounds having two or more isocyanate (NCO) groups in one molecule; polythiol compounds having two or more thiol groups (mercapto groups) in one molecule; and the like. The "compound that forms a covalent-bond cross-linking moiety (the compound that forms a covalent bond)" herein can be a compound capable of introducing both the hydrogen-bond cross-linkable moiety and the covalent-bond cross-linking moiety depending on the type of the substituent of the compound, the degree of the progress of a reaction in a case where the reaction is carried out by using such a compound, or the like (for example, when a covalent-bond cross-linking moiety is formed by using a compound having three or more hydroxyl groups as the cross-linkable compound, two of the hydroxyl groups reacts with a functional group (maleic anhydride group) of the maleic anhydride graft-modified thermoplastic polymer, and the remaining one hydroxyl group is left as a hydroxyl group in some cases depending on the degree of the progress of the reaction, and in such a case, a moiety that can form hydrogen-bond cross-linking can also be introduced). For this reason, the examples of the "compound that forms a covalent-bond cross-linking moiety (compound that forms a covalent bond)," listed herein may also include "compound that forms both a hydrogen-bond cross-linkable moiety and a covalent-bond cross-linking moiety." From such a viewpoint, in the case of forming the side chain (b), the side chain (b) may be formed by selecting a compound from "compounds that form a covalent-bond cross-linking moiety (compounds that form a covalent bond)," as appropriate, according to a target design, controlling the degree of the progress of the reaction, as appropriate, or doing the like. Note that when the compound that forms a covalent-bond cross-linking moiety has a heterocycle, a hydrogen-bond cross-linkable moiety can also be simultaneously produced more efficiently, and a side chain having the covalent-bond cross-linking moiety can be formed efficiently as the side chain (c) described later. For this reason, specific examples of such compounds each having a heterocycle are described particularly together with the side chain (c) as preferred compounds for producing the side chain (c). Note that because of its structure, the side chain (c) can also be regarded as a preferred mode of side chains such as the side chain (a) and the side chain (b).

As the polyamine compounds, the polyol compounds, the polyisocyanate compounds, and the polythiol compounds usable as the "compound that forms a covalent-bond cross-linking moiety (the compound that forms a covalent bond)," it is possible to use known ones (for example, those described in paragraphs [0094] to [0106] of JP 5918878 B or the like), as appropriate.

<Side Chain (C): Side Chain Containing Both Hydrogen-Bond Cross-Linkable Moiety and Covalent-Bond Cross-Linking Moiety>

The side chain (c) contains both a hydrogen-bond cross-linkable moiety and a covalent-bond cross-linking moiety in a single side chain. The hydrogen-bond cross-linkable moiety contained in the side chain (c) is the same as the hydrogen-bond cross-linkable moiety described for the side chain (a'), and preferred ones thereof are the same as those for the hydrogen-bond cross-linkable moiety in the side chain (a). In addition, as the covalent-bond cross-linking moiety contained in the side chain (c), the same covalent-bond cross-linking moiety as that in the side chain (b) can be used (the same cross-linkages can be used as preferred cross-linkages thereof).

The side chain (c) is preferably one formed by reacting a maleic anhydride graft-modified thermoplastic polymer with a cross-linkable compound consisting of a compound that forms both a hydrogen-bond cross-linkable moiety and a covalent-bond cross-linking moiety (a compound that introduces both a hydrogen-bond cross-linkable moiety and a covalent-bond cross-linking moiety) upon a reaction with a functional group (maleic anhydride group) of the maleic anhydride graft-modified thermoplastic polymer.

The "compound that forms both a hydrogen-bond cross-linkable moiety and a covalent-bond cross-linking moiety (the compound that introduces both a hydrogen-bond cross-linkable moiety and a covalent-bond cross-linking moiety)" usable as the cross-linkable compound is preferably a compound having a substituent (for example, a hydroxyl group, a thiol group, an amino group, an imino group, or the like) that can react with a maleic anhydride group, and is more preferably a compound having at least one of a hydroxyl group, an amino group, an imino group, and a thiol group. In addition, the compound that forms both a hydrogen-bond cross-linkable moiety and a covalent-bond cross-linking moiety (the compound that introduces both a hydrogen-bond cross-linkable moiety and a covalent-bond cross-linking moiety) is preferably a compound that has a heterocycle (particularly preferably a nitrogen-containing heterocycle) and is capable of forming a covalent-bond cross-linking moiety (a compound that forms a covalent bond), and, especially, the compound is more preferably a heterocycle-containing polyol, a heterocycle-containing polyamine, a heterocycle-containing polythiol, or the like. Note that, as the heterocycle-containing polyols, polyamines, and polythiols, it is possible to use, as appropriate, the same ones as the polyol compounds, the polyamine compounds, and the polythiol compounds described for the above-described "compound capable of forming a covalent-bond cross-linking moiety (compound that forms a covalent bond)," except that a heterocycle (particularly preferably a nitrogen-containing heterocycle) is present. In addition, as the heterocycle-containing polyols, polyamines, and polythiols, it is possible to use, as appropriate, known ones (for example, those described in paragraph [0113] of JP 5918878 B).

(Regarding Structures Preferred as Covalent-Bond Cross-Linking Moieties in Side Chains (b) and (c))

Regarding the side chains (b) and/or (c), suppose a case where the cross-linkage at the covalent-bond cross-linking moiety contains a tertiary amino bond (-N=) or an ester bond (-COO-), and the binding site of such a bond also functions as a hydrogen-bond cross-linkable moiety. Such a case is preferable from the viewpoint that the cross-linking is reinforced by formation of a hydrogen bond with another hydrogen-bond cross-linkable moiety and the like. When a tertiary amino bond (-N=) or an ester bond (-COO-) in a side chain having a covalent-bond cross-linking moiety forms a hydrogen bond with another side chain as described above, the covalent-bond cross-linking moiety containing a tertiary amino bond (-N=) or an ester bond (-COO-) can be considered to also comprise a hydrogen-bond cross-linkable moiety, and can function as the side chain (c).

Preferred examples of the compound that can form a covalent-bond cross-linking moiety containing the tertiary amino bond and/or the ester bond upon reaction with a maleic anhydride group which is a functional group in the maleic anhydride graft-modified thermoplastic polymer (the compound capable of forming both a hydrogen-bond cross-linkable moiety and a covalent-bond cross-linking moiety: a type of cross-linkable compounds) include polyethylene glycol laurylamines (for example, N,N-bis(2-hydroxyethyl)laurylamine), polypropylene glycol laurylamines (for example, N,N-bis(2-methyl-2-hydroxyethyl)laurylamine), polyethylene glycol octylamine (for example, N,N-bis(2-hydroxyethyl)octylamine), polypropylene glycol octylamine (for example, N,N-bis(2-methyl-2-hydroxyethyl)octylamine), polyethylene glycol stearylamine (for example, N,N-bis(2-hydroxyethyl)stearylamine), and polypropylene glycol stearylamine (for example, N,N-bis(2-methyl-2-hydroxyethyl)stearylamine).

The cross-linkage at the covalent-bond cross-linking moiety in the side chain (b) and/or the side chain (c) may be, for example, one having the same structure as that described in paragraphs [0100] to [0109] of Japanese Unexamined Patent Application Publication No. 2017-206604 or the same structure as that described in paragraphs [0055] to [0061] of International Publication No. WO 2019/027022.

Hereinabove, the side chain (a'), the side chain (a), the side chain (b), and the side chain (c) are described. The groups (structures) and the like of the side chains in the polymers can be identified by ordinarily used analytic techniques such as NMR and IR spectrometry.

In addition, the polymer (A) is a polymer having the side chain (a) and having a glass-transition point of 25°C or below, and the polymer (B) is a polymer containing a hydrogen-bond cross-linkable moiety and a covalent-bond cross-linking moiety in a side chain and having a glass-transition point of 25°C or below (a polymer having both the side chain (a') and the side chain (b) as side chains, a polymer containing the side chain (c) as a side chain, or the like). Here, as the polymer component according to the present invention, one of the above-described polymers (A) and (B) can be used alone, or a mixture of two or more thereof may be used.

Note that the polymer (B) may be either a polymer having both a side chain (a') and a side chain (b), or a polymer having a side chain (c). From the viewpoint that a stronger hydrogen bond is formed, the hydrogen-bond cross-linkable moiety contained in the side chain of the polymer (B) is preferably a hydrogen-bond cross-linkable moiety having a carbonyl-containing group and/or a nitrogen-containing heterocycle (more preferably a hydrogen-bond cross-linkable moiety having a carbonyl-containing group and a nitrogen-containing heterocycle). In addition, the cross-linkage in the covalent-bond cross-linking moiety contained in the side chain of the polymer (B) is preferably formed by at least one bond selected from the group consisting of amide, ester, and thioester from the viewpoint that it is also possible to cause intermolecular interactions such as hydrogen bonding between side chains containing the cross-linking moiety.

In addition, the polymers (A) and (B) according to the present invention are each a reaction product of a maleic anhydride graft-modified thermoplastic polymer having a maleation ratio of 0.1 to 10% by mass and a cross-linkable compound.

As described above, the maleic anhydride graft-modified thermoplastic polymer used for forming the polymers (A) and (B) has a maleation ratio of 0.1 to 10% by mass. The upper limit value of the numeric value range (0.1 to 10% by mass) of the maleation ratio is more preferably 5% by mass, further preferably 3% by mass, particularly preferably 2.7% by mass, and most preferably 2.5% by mass. Meanwhile, the lower limit value of the numeric value range (0.1 to 10% by mass) of the maleation ratio is more preferably 0.2% by mass, further preferably 0.3% by mass, and most preferably 0.5% by mass. If the maleation ratio is lower than the lower limit, the cross-linking density cannot be increased sufficiently in a cross-linking reaction, so that the mechanical properties (tensile properties and compression set) of the composition tends to be poor. Meanwhile, if the maleation ratio exceeds the upper limit, the cross-linking density of the resultant polymer is so high that it tends to be difficult to maintain the compatibility of the polymer with rubber in a high state.

Note that the value of the "maleation ratio" (unit: % by mass) employed in the present invention is determined by employing [Method of Measuring Maleation Ratio] described below.

[Method of Measuring Maleation Ratio]

First, 400 mg of a maleic anhydride graft-modified thermoplastic polymer to be measured is dissolved in 80 mL of tetrahydrofuran (hereinafter sometimes abbreviated as "THF" for convenience) to obtain a THF solution for measurement. Subsequently, the THF solution for measurement is titrated with a 0.1 mol/L potassium hydroxide solution in ethanol whose factor has been determined to three or more decimal places (standard solution for volumetric analysis: a 0.1 mol/L potassium hydroxide solution in ethanol with correction value: it is also possible to use a commercially available solution whose factor (characteristic value: correction value) is provided to three or more decimal places). Here, the endpoint (point of neutralization) is determined by potentiometric titration using an instrument. In addition, the factor (characteristic value: correction value) of the 0.1 mol/L potassium hydroxide solution in ethanol may be determined by titration with an oxalic acid standard solution, or when a commercially available product whose factor has been determined is used, the factor provided for the commercially available reagent (for example, the factor described in the certificate of analysis of the reagent or the like) may be used, as it is. Subsequently, the amount (blank value) of the 0.1 mol/L potassium hydroxide solution in ethanol added dropwise to 80 mL of THF is also determined by titration conducted by performing measurement (a blank test) that is the same as above, except that no maleic anhydride graft-modified thermoplastic polymer is used. Next, the determined titration value (amount added dropwise) is used to calculate the acid number on the basis of the "Calculation Formula of Acid Number" described below, and subsequently, the obtained value of the acid number is used to calculate the maleation ratio on the basis of the "Calculation Formula of Maleation Ratio" described below. Thus, the maleation ratio (unit: % by mass) is determined.

<Calculation Formula of Acid Number>

$$[Acid\ Number] = (A - B) \times M_1 \times C \times f/S$$

(where A represents the amount of the 0.1 mol/L potassium hydroxide solution in ethanol added dropwise to neutralize the solution for measurement (titration value: mL), B represents the amount of the 0.1 mol/L potassium hydroxide solution in ethanol added dropwise in blank (the blank test) (the titration value obtained by conducting the same measurement, except that no maleic anhydride graft-modified thermoplastic polymer is used (blank value: mL)), $M_1$ represents the molecular weight (56.1 (constant)) of potassium hydroxide, C represents the concentration (0.1 mol/L (constant)) of potassium hydroxide in the potassium hydroxide solution in ethanol, and f represents the factor of the potassium hydroxide solution in ethanol (correction value: the factor indicated for the commercially available reagent (for example, the factor described in the certificate of analysis of the reagent or the like) may be used, as it is), and S represents the mass (400 g (constant)) of the maleic anhydride graft-modified thermoplastic polymer used for the measurement. Note that the unit of the "acid number" determined by this calculation is "mgKOH/g").

<Calculation Formula of Maleation Ratio>

$$[Maleation\ Ratio] = [Acid\ Number] \div M_1 \times M_2 \div 1000 \times 100 \div 2$$

(where the acid number represents the value (unit: mgKOH/g) determined by the "Calculation Formula of Acid Number" described above, $M_1$ represents the molecular weight (56.1 (constant)) of potassium hydroxide, and $M_2$ represents the molecular weight (98.1 (constant)) of maleic anhydride. The unit of the "maleation ratio" determined by the calculation is "% by mass").

Moreover, the maleic anhydride graft-modified thermoplastic polymer used for forming the polymers (A) and (B) preferably has a melting point of 64°C or below (more preferably 60°C to -100°C). If the melting point of the maleic anhydride graft-modified thermoplastic polymer exceeds the upper limit, the hardness tends to be high. As the melting point, a value measured by differential scanning calorimetry (DSC - Differential Scanning Calorimetry) is employed. Note that the melting point is measured at a rate of temperature rise of 10°C/min.

In addition, as the main chain of the maleic anhydride graft-modified thermoplastic polymer (a polymer forming the main chain portion of each of the polymers (A) and (B)), one selected from what are called thermoplastic polymers can be used, as appropriate (note that the "thermoplastic polymer" in the maleic anhydride graft-modified thermoplastic polymer herein only needs to have thermoplasticity, and may be, for example, what is called "elastomer" or "rubber").

The main chain of the maleic anhydride graft-modified thermoplastic polymer (the polymer forming the main chain portion of each of the polymers (A) and (B)) is not particularly limited, and, in particular, is more preferably a polyolefin-based polymer, a polyester-based polymer, a polyamide-based polymer, a polystyrene-based polymer, a polyacrylate-based polymer, a polyacrylonitrile-based polymer, a polyacetal-based polymer, a polycarbonate-based polymer, a polyolefin-acrylate copolymer, or a diene-based polymer, further preferably a polyolefin-based polymer, a polyacrylate-based polymer, a polyolefin-acrylate copolymer, or a diene-based polymer, particularly preferably a polyolefin-based polymer, a diene-based polymer, or a polystyrene-based polymer, and most preferably a polyolefin-based polymer or a diene-based polymer. Note that one of these polymers may be used alone, or two or more thereof may be used in combination.

In addition, the polyolefin-based polymer preferable as the main chain of the maleic anhydride graft-modified thermoplastic polymer is not particularly limited, and may be an $\alpha$-olefin polymer or a polymer consisting of a copolymer of an $\alpha$-olefin and another copolymerizable monomer. In addition, the diene-based polymer preferable as the main chain of the maleic anhydride graft-modified thermoplastic polymer only needs to contain a double bond in the molecular structure of the polymer, and is a concept also encompassing an ethylene-propylene-diene copolymer having a double bond at a cross-linking site, and the like. In addition, as the diene-based polymer preferable as the main chain of the maleic anhydride graft-modified thermoplastic polymer, a known diene-based polymer can be used, as appropriate, and is not particularly limited. However, the diene-based polymer is preferably butadiene rubber (BR), natural rubber (NR), isoprene rubber (IR), or styrene-butadiene rubber (SBR) from the viewpoint that it has a glass transition temperature suitable for more easily keeping low hardness even at a low temperature. Moreover, as the polystyrene-based polymer preferable as the main chain of the maleic anhydride graft-modified thermoplastic polymer, a known polystyrene-based polymer can be used, as appropriate, and is not particularly limited. However, the polystyrene-based polymer is preferably a styrene-ethylene-butylene-styrene block copolymer (SEBS) from the viewpoint of improvement in oil retention.

In particular, the thermoplastic polymer used as the main chain of the maleic anhydride graft-modified thermoplastic polymer is preferably polypropylene (PP), polyethylene (PE), ethylene-butene copolymer (EBM), ethylene-propylene copolymer (EPM), ethylene-octene copolymer (EOM), or ethylene-propylene-diene copolymer (EPDM), more preferably EBM, EPM, EOM, or EPDM, and further preferably EBM, EOM, or EPDM from the viewpoint of compatibility with nonpolar rubbers.

In addition, the main chain of the maleic anhydride graft-modified thermoplastic polymer (the polymer forming the main chain portion of each of the polymers (A) and (B)) is preferably a polymer containing no double bond from the viewpoint of improving the processability and anti-aging properties at cross-linking. From such a viewpoint, the main chain of the maleic anhydride graft-modified thermoplastic polymer is preferably PE, EBM, or EOM, and more preferably PE, EBM, or EOM. Meanwhile, the main chain of the maleic anhydride graft-modified thermoplastic polymer is preferably a double bond-containing polymer from the viewpoint of improving mechanical properties such as wear resistance by co-cross-linking with an uncross-linked rubber during the cross-linking. From such a viewpoint, the main chain of the maleic anhydride graft-modified thermoplastic polymer is preferably EPDM.

Note that the maleic anhydride graft-modified thermoplastic polymer is a graft-modified product obtaining by graft-modifying the thermoplastic polymer described as the main chain with maleic anhydride (a thermoplastic polymer graft-modified with maleic anhydride). For this reason, the maleic anhydride graft-modified thermoplastic polymer is preferably a polyolefin-based polymer graft-modified with maleic anhydride and/or a diene-based polymer graft-modified with maleic anhydride, and more preferably a maleic anhydride graft-modified product of at least one thermoplastic polymer selected from the group consisting of PP, PE, EBM, EPM, EOM, and EPDM. Note that one of these maleic anhydride graft-modified thermoplastic polymers may be used alone, or two or more thereof may be used as a mixture.

In addition, the maleic anhydride graft-modified thermoplastic polymer only needs to be a graft-modified product obtained by graft-modification of the thermoplastic polymer with maleic anhydride (a thermoplastic polymer graft-modified with maleic anhydride), and to satisfy the above-described condition of maleation ratio. The method for producing the maleic anhydride graft-modified thermoplastic polymer is not particularly limited, and the maleic anhydride graft-modified thermoplastic polymer can be easily produced by employing a known method for preparing a maleic anhydride graft-modified thermoplastic polymer, and adjusting, as appropriate, the types of raw materials and the amounts of the raw materials used, to satisfy the above-described condition. In addition, as the maleic anhydride graft-modified thermoplastic polymer, a commercially available product may be used, as appropriate, as long as the above-described condition is satisfied.

In addition, the cross-linkable compound only needs to be capable of forming any of the polymers (A) and (B) upon reaction with a maleic anhydride group in the maleic anhydride graft-modified thermoplastic polymer, and is not particularly limited. One selected from various compounds capable of forming a cross-linking moiety upon reaction with a maleic anhydride group (a compound capable of forming an intended side chain) may be used, as appropriate, according to the intended design.

As the cross-linkable compound, it is preferable to use the above-described "compound that forms a hydrogen-bond cross-linkable moiety (more preferably a compound capable of introducing a nitrogen-containing heterocycle)" or the above-described "compound that forms a covalent-bond cross-linking moiety (compound that forms a covalent bond)." In addition, the cross-linkable compound is preferably a compound having at least one of a hydroxyl group, an amino group, an imino group, and a thiol group from the viewpoint that the reaction proceeds efficiently. In addition, the compound having at least one of a hydroxyl group, an amino group, an imino group, and a thiol group is more preferably one having a nitrogen-containing heterocycle (the nitrogen-containing heterocycle is more preferably at least one selected from a triazole ring, an isocyanurate ring, a thiadiazole ring, a pyridine ring, an imidazole ring, a triazine ring, and a hydantoin ring) (Note that the "nitrogen-containing heterocycle," including preferred ones thereof, herein is the same as that described above). As the compound, for example, one described in paragraph [0049] of International Publication No. WO2020/027109 can be used, as appropriate. One of these compounds may be used alone, or two or more thereof may be used as a mixture.

In addition, the cross-linkable compound is preferably at least one compound selected from the group consisting of nitrogen-containing compounds optionally having at least one substituent selected from hydroxyl groups, thiol groups, amino groups, and imino groups, oxygen-containing compounds optionally having at least one substituent selected from hydroxyl groups, thiol groups, amino groups, and imino groups, and sulfur-containing compounds optionally having at least one substituent selected from hydroxyl groups, thiol groups, amino groups, and imino groups from the viewpoints of high reactivity and industrial availability. Note that, as the "compound that forms a hydrogen-bond cross-linkable moiety ( compound capable of introducing a nitrogen-containing heterocycle)" or the "compound that forms a covalent-bond cross-linking moiety (compound that forms a covalent bond)," it is possible to use one selected from known compounds (compounds described in Japanese Unexamined Patent Application Publication No. 2017-57322 or JP 5918878 B), as appropriate, as long as the compound can react with a maleic anhydride group.

In addition, the cross-linkable compound is preferably at least one selected from the group consisting of triazoles optionally having at least one substituent selected from hydroxyl groups, thiol groups, amino groups, and imino groups; pyridines optionally having at least one substituent selected from hydroxyl groups, thiol groups, amino groups, and imino groups; thiadiazoles optionally having at least one substituent selected from hydroxyl groups, thiol groups, amino groups, and imino groups; imidazoles optionally having at least one substituent selected from hydroxyl groups, thiol groups, amino groups, and imino groups; isocyanurates optionally having at least one substituent selected from hydroxyl groups, thiol groups, amino groups, and imino groups; triazines optionally having at least one substituent selected from hydroxyl groups, thiol groups, amino groups, and imino groups; hydantoins optionally having at least one substituent selected from hydroxyl groups, thiol groups, amino groups, and imino groups; tris(2-hydroxyethyl) isocyanurate; 2,4-diamino-6-phenyl-1,3,5-triazine (benzoguanamine); 2,4-diamino-6-methyl-1,3,5-triazine (acetoguanamine); pentaerythritol; sulfamide; and polyether polyol.

The cross-linkable compound is preferably tris(2-hydroxyethyl) isocyanurate, sulfamide, pentaerythritol, 2,4-diamino-6-phenyl-1,3,5-triazine, 2,4-diamino-6-methyl-1,3,5-triazine, or polyether polyol, and further preferably pentaerythritol, 2,4-diamino-6-phenyl-1,3,5-triazine, 2,4-diamino-6-methyl-1,3,5-triazine, or tris(2-hydroxyethyl) isocyanurate from the viewpoint of resistance to compression set.

In addition, the method for obtaining a reaction product of the maleic anhydride graft-modified thermoplastic polymer and the cross-linkable compound is not particularly limited. The method may be any, as long as the method enables the polymer (A) or (B) to be formed by reacting a maleic anhydride group in the maleic anhydride graft-modified thermoplastic polymer with a functional group in the cross-linkable compound (may be any, as long as the method enables the formation of the cross-linking moiety described for the polymers (A) and (B)) and the reaction may be conducted, as appropriate, according to the type of the cross-linkable compound and the like. For example, a method may be employed in which while the maleic anhydride graft-modified thermoplastic polymer is being mixed (kneaded) by using a kneading machine such as a kneader at a temperature (for example, about 100 to 250°C) at which the maleic anhydride graft-modified thermoplastic polymer can be plasticized and the cross-linkable compound to be added and the maleic anhydride group can be reacted with each other, the cross-linkable compound is added to conduct the reaction.

(Regarding Composition)

The rubber composition of the present invention comprises the uncross-linked rubber having no hydrogen-bond cross-linkable moiety and the polymer component.

The amount (content ratio) of the polymer component contained in the rubber composition is 0.01 to 200 parts by mass relative to 100 parts by mass of the uncross-linked rubber. If the amount of the polymer component contained is less than the lower limit, the effect obtained by the introduction of the polymer component cannot be exhibited sufficiently. Meanwhile, if the amount exceeds the upper limit, the ratio of the uncross-linked rubber is so low that the cross-linking density is low and the rubber properties of the cross-linked rubber composition are poor, when a cross-linked rubber composition is produced by cross-linking (vulcanization) using a cross-linking agent for rubber (vulcanization agent) described later or the like. In addition, from the same viewpoint, the amount (content ratio) of the polymer component contained in the rubber composition is more preferably 0.01 to 150 parts by mass, further preferably 0.1 to 100 parts by mass, more preferably 1 to 50 parts by mass, particularly preferably 2 to 30 parts by mass, and most preferably 5 to 15 parts by mass relative to 100 parts by mass of the uncross-linked rubber.

In addition, the rubber composition of the present invention may contain an additional component other than the uncross-linked rubber having no hydrogen-bond cross-linkable moiety and the polymer component according to the use or the like within a range not departing from an object of the present invention. The additional component only needs to be one usable for rubber compositions, and is not particularly limited. It is possible to use, as appropriate, a known component usable for rubber compositions.

In addition, the rubber composition of the present invention preferably further contains at least one selected from the group consisting of silica and carbon black. When the rubber composition contains such silica and/or carbon black, the hardness can be further increased, and the modulus and breaking strength can be further improved.

When the rubber composition of the present invention contains at least one selected from the group consisting of silica and carbon black, the total amount of the silica and the carbon black is preferably 10 to 150 parts by mass (more preferably 15 to 120 parts by mass, further preferably 30 to 100 parts by mass) relative to 100 parts by mass of the uncross-linked rubber. If the total amount of the silica and/or the carbon black is less than the lower limit, the effect (reinforcement effect) obtained by introduction of them tends to be not necessarily sufficient. Meanwhile, if the total amount exceeds the upper limit, the breaking strength tends to be lowered, rather.

In addition, such silica is preferably one having a BET specific surface area (in accordance with ASTM D1993-03) of 40 to 250 m$^2$/g (more preferably 70 to 200 m$^2$/g). Examples of such silica include dry-process silica (for example, fumed silica and the like) produced by a thermal decomposition method or the like for silicon halide or organosilicon compound, wet-process silica produced by an acid decomposition method for sodium silicate or the like. In addition, such silica is more preferably wet-process silica from the viewpoints of cost and performance. Moreover, as such silica, it is possible to use those marketed as silica for the rubber industry (commercial products) as it is. Such silica may be used alone, or may be used in combination with carbon black.

In addition, when containing silica, the rubber composition of the present invention preferably further contains a silane coupling agent from the viewpoint of further improving the properties required for silica, from the viewpoint of further improving dispersibility in the rubber having no hydrogen-bond cross-linkable moiety (silica has poor affinity for rubber polymers, and has a property of forming hydrogen bonds between silica molecules in the rubber through silanol groups, to lower the dispersibility of the silica in rubber). In addition, when such a silane coupling agent is contained, the amount of the silane coupling agent contained is preferably about 0.5 to 15 parts by weight relative to 100 parts by weight of the silica. Moreover, as the silane coupling agent, it is preferable to use a polysulfide-based silane coupling agent having an alkoxysilyl group that reacts with a silanol group on the silica surface and a sulfur chain that reacts with a polymer, such as bis(3-triethoxysilylpropyl) tetrasulfide, bis(2-triethoxysilylethyl) tetrasulfide, bis(3-trimethoxysilylpropyl) tetrasulfide, or bis(3-triethoxysilylpropyl) disulfide. Note that a commercially available product can be used as the silane coupling agent, as appropriate, and, for example, one manufactured by Evonik Industries AG (former company name: Evonik Degussa) under the trade name of "Si-69" or "Si-75" may be used.

In addition, the carbon black is not particularly limited, and it is possible to use a known carbon black that can be used for rubber compositions, as appropriate. Among such carbon blacks, furnace blacks such as SAF, ISAF, HAF, FEF, GPF, and SRF are preferable from the viewpoints of reinforcement and dispersibility. As such a carbon black, a commercially available one (commercial product) may be used as it is. Note that such a carbon black is an effective component for forming a tread portion of a tire, particularly a cap tread portion. Such a carbon black may be used alone or in combination with silica.

In addition, the rubber composition of the present invention may further contain a clay. As the clay, it is possible to use known clays (for example, those described in paragraphs [0146] to [0156] of JP 5918878 B, those described in paragraphs [0146] to [0155] of Japanese Unexamined Patent Application Publication No. 2017-057393, and the like), as appropriate. Among such clays, at least one selected from the group consisting of clays containing silicon and magnesium as main components and organically modified clays is preferable, and an organically modified clay is particularly preferable from the viewpoint of high dispersibility. As described above, the polymer composition of the present invention preferably further contains a clay, and particularly preferably contains an organically modified clay.

When the rubber composition of the present invention contains a clay, the amount (content ratio) of the clay contained is preferably 20 parts by mass or less, more preferably 0.01 to 10 parts by mass, further preferably 0.05 to 5 parts by mass, and particularly preferably 0.08 to 3 parts by mass relative to 100 parts by mass of the polymer component. If the amount of the clay contained is less than the lower limit, the amount of the clay contained is so small that a sufficient reinforcement effect tends not to be obtained. Meanwhile, if the amount of the clay contained exceeds the upper limit, the formation of the hydrogen-bond cross-linkable moiety is inhibited, so that the reinforcement by the clay decreases, and it tends to be difficult to use the rubber composition of the present invention for various application (the practicability tends to decrease).

In addition, the rubber composition of the present invention more preferably further contains an α-olefin-based polymer having no chemical-bond cross-linking moiety from the viewpoint of formability (fluidity). The "α-olefin-based polymer" mentioned here is an α-olefin homopolymer or an α-olefin copolymer, and the "α-olefin" mentioned here is an alkene having a carbon-carbon double bond at the α position. Examples thereof include ethylene, propylene, 1-butene, 1-pentene, 1-hexene, 1-heptene, 1-octene, 1-nonene, 1-decene, and the like.

In addition, in the present specification, the "chemical-bond cross-linking moiety" means a moiety in which a cross linkage is formed by a chemical bond such as a hydrogen bond, a covalent bond, chelation between a metal ion and a polar functional group, and a bond formed by σ-π interaction in a metal-unsaturated bond (double bond, triple bond). Accordingly, "having no chemical-bond cross-linking moiety" in the present specification means a state where no moiety is contained that forms a cross-linkage by a chemical bond such as a hydrogen bond, a covalent bond, or an ionic bond.

As such an α-olefin-based polymer having no chemical-bond cross-linking moiety, it is preferable to use, for example, those described in paragraphs [0204] to [0214] of Japanese Unexamined Patent Application Publication No. 2017-57322. In addition, such an α-olefin-based polymer having no chemical-bond cross-linking moiety is preferably polypropylene, polyethylene, ethylene-propylene copolymer, or ethylene-butene copolymer from the viewpoint of compatibility with the polymer component. In addition, among such α-olefin-based polymers having no chemical-bond cross-linking moiety, it is preferable to use an α-olefin-based polymer having a degree of crystallinity of 10% or lower (polypropylene, ethylene-propylene copolymer, ethylene-butene copolymer, polyethylene, polybutene, or the like). There is no particular limitation on the method for producing such an α-olefin-based polymer having no chemical-bond cross-linking moiety, and it is possible to employ a known method, as appropriate. As such an α-olefin-based polymer, a commercially available product may also be used. Note that one of such α-olefin-based polymers having no chemical-bond cross-linking moiety may be used alone, or two or more thereof may be used in combination.

In addition, the amount (content ratio) of such an α-olefin-based polymer having no chemical-bond cross-linking moiety contained can be changed, as appropriate, according to the intended use and design, and is not particularly limited. For example, it is more preferable to use the α-olefin-based polymer such that the amount of the α-olefin-based polymer contained is 300 parts by mass or less (more preferably 5 to 250 parts by mass, further preferably 10 to 225 parts by mass, particularly preferably 25 to 200 parts by mass, and most preferably 35 to 175 parts by mass) relative to 100 parts by mass of the polymer component. If the amount of the α-olefin-based polymer contained is less than the lower limit, sufficient fluidity tends not to be obtained. Meanwhile, if the amount of the α-olefin-based polymer contained exceeds the upper limit, the rubber elasticity decreases, and the resin property tends to increase (the hardness tends to be higher than necessary). In addition, from the same viewpoint, the amount of the α-olefin-based polymer contained is preferably 0.1 to 100 parts by mass, and more preferably 0.5 to 80 parts by mass relative to 100 parts by mass of the uncross-linked rubber.

Moreover, the rubber composition of the present invention preferably further contains a styrene block copolymer having no chemical-bond cross-linking moiety. As the styrene block copolymer having no chemical-bond cross-linking moiety, it is preferable to use those described in paragraphs [0156] to [0163] of Japanese Unexamined Patent Application Publication No. 2017-57393. Note that the "styrene block copolymer" only needs to be a polymer having a styrene block structure in any portion.

Such a styrene block copolymer having no chemical-bond cross-linking moiety is preferably a styrene-isoprene-styrene block copolymer (SIS), a styrene-ethylene-propylene-styrene block copolymer (SEPS, a hydrogenated product of SIS), a styrene-ethylene-ethylene-propylene-styrene block copolymer (SEEPS, a hydrogenated product of SIBS), a styrene-butadiene-styrene block copolymer (SBS), a styrene-ethylenebutylene-styrene block copolymer (SEBS, a hydrogenated product of SBS), or a styrene-isoprene-butadiene-styrene block copolymer (SIBS), and more preferably SEBS or SEEPS, from the viewpoint of compatibility between rubber elasticity and thermoplasticity. One of such styrene block copolymers may be used alone, or two or more thereof may be used in combination. As the styrene block copolymer, a commercially available one can be used, as appropriate.

When such a styrene block copolymer is used, the amount (content ratio) of the styrene block copolymer contained is not particularly limited, but is preferably 1 to 5000 parts by mass relative to 100 parts by mass of the polymer component. Note that although the upper limit value of a preferred numerical range of such a content ratio is 5000 parts by mass relative to 100 parts by mass of the polymer component, the upper limit value is more preferably 3000 parts by mass, further preferably 1000 parts by mass, and particularly preferably 800 parts by mass. Moreover, although the lower limit value of a preferred numerical range of such a content ratio is 1 part by mass relative to 100 parts by mass of the polymer component, the lower limit value is more preferably 5 parts by mass, and further preferably 10 parts by mass. In addition, the content ratio of the styrene block copolymer is more preferably 1 to 1000 parts by mass and further preferably 5 to 800 parts by mass relative to 100 parts by mass of the polymer component. If the content ratio is less than the lower limit, oil bleeding tends to occur when an oil is added. Meanwhile, if the content ratio exceeds the upper limit, the formability tends to decrease. In addition, from the same viewpoint, the amount (content ratio) of the styrene block copolymer contained is preferably 0.1 to 100 parts by mass and more preferably 0.5 to 80 parts by mass relative to 100 parts by mass of the uncross-linked rubber.

In addition, the rubber composition of the present invention more preferably further contains a process oil. Examples of such a process oil include paraffin oils (paraffinic oils), naphthene oils (naphthenic oils), and aroma oils (aromatic oils). Regarding such paraffin oils, naphthene oils, and aroma oils, it is particularly preferable to use an aroma oil, when the uncross-linked rubber is a diene-based rubber, and it is particularly preferable to use a naphthene oil in combination, when the uncross-linked rubber is a chloroprene rubber or a butyl rubber. Such a process oil is not particularly limited, and a known process oil can be used, as appropriate, and a commercially available one can be used, as appropriate.

In addition, when the polymer component contained in the rubber composition of the present invention has an olefinic polymer main chain, it is more preferable to use a paraffin oil among others as the process oil contained in the composition because the compatibility can be increased. The paraffin oil is not particularly limited, and a known paraffin oil can be used, as appropriate. For example, it is possible to use those described in paragraphs [0153] to [0157] of Japanese Unexamined Patent Application Publication No. 2017-57323, as appropriate. A commercially available paraffin oil can be used as the paraffin oil, as appropriate.

When such a process oil (more preferably a paraffin oil) is used, the amount (content ratio) of the process oil contained is not particularly limited, but is preferably 1 to 30000 parts by mass relative to 100 parts by mass of the polymer component. Note that although the upper limit value of a preferred numerical range of the content ratio is 30000 parts by mass relative to 100 parts by mass of the polymer component, the upper limit value is more preferably 25000 parts by mass, further preferably 20000 parts by mass, more preferably 15000 parts by mass, further preferably 10000 parts by mass, more preferably 8000 parts by mass, further preferably 7000 parts by mass, particularly preferably 6000 parts by mass, and most preferably 5000 parts by mass. In addition, although the lower limit value of a preferred numerical range of the content ratio is 1 part by mass relative to 100 parts by mass of the polymer component, the lower limit value is more preferably 10 parts by mass, further preferably 30 parts by mass, particularly preferably 50 parts by mass, and most preferably 75 parts by mass. In addition, the content ratio of such a process oil (more preferably a paraffin oil) is more preferably 10 to 1000 parts by mass, further preferably 30 to 900 parts by mass, particularly preferably 50 to 800 parts by mass, and most preferably 75 to 700 parts by mass relative to 100 parts by mass of the polymer component. If the amount of the process oil contained is less than the lower limit, the amount of the process oil contained is so small that sufficient effects tend not to be obtained particularly in terms of flowability and processability. Meanwhile, if the amount exceeds the upper limit, bleeding of the process oil tends to be induced easily. In addition, from the same viewpoint, the amount (content ratio) of the process oil contained is preferably 0.1 to 300 parts by mass, and more preferably 0.5 to 200 parts by mass relative to 100 parts by mass of the uncross-linked rubber.

In addition, the rubber composition preferably further contains a cross-linking agent for rubber (vulcanization agent) because the uncross-linked rubber is used after cross-linking (vulcanization). The cross-linking agent for rubber (vulcanization agent) is not particularly limited, as long as it enables cross-linking (vulcanization or the like) of the uncross-linked rubber having no hydrogen-bond cross-linkable moiety (for example, the diene-based rubber). A known cross-linking agent for rubber can be used, as appropriate. Note that the cross-linking agent for rubber (vulcanization agent) may be what is called sulfur-based one (sulfur-based cross-linking agent) or a non-sulfur-based one (non-sulfur-based cross-linking agent: for example, a peroxide-based cross-linking agent or the like).

In addition, as the cross-linking agent for rubber (vulcanization agent), it is preferable to use a peroxide-based cross-linking agent, a phenolic resin-based cross-linking agent, a sulfur-based cross-linking agent, or a silane-based cross-linking agent. The peroxide-based cross-linking agent, phenolic resin-based cross-linking agent, sulfur-based cross-linking agent, and silane-based cross-linking agent that can be used as the cross-linking agent for rubber are not particularly limited, and known ones can be used, as appropriate. For example, the peroxide-based cross-linking agents, phenolic resin-based cross-linking agents, sulfur-based cross-linking agents, and silane-based cross-linking agents described in International Publication No. WO 2019/027022 may be used, as appropriate.

Of these cross-linking agents for rubber, sulfur-based cross-linking agents and peroxide-based cross-linking agents are preferable, sulfur-based cross-linking agents are more preferable from the viewpoint that physical properties are further improved. In addition, of these cross-linking agents for rubber, peroxide-based cross-linking agents are preferable from the viewpoint of heat aging resistance. As described above, in the present invention, it is more preferable that a peroxide-based cross-linking agent be used as the cross-linking agent for rubber (vulcanization agent) from the viewpoint of heat aging resistance, and it is more preferable that owing to this a cross-linked rubber composition obtained after cross-linking have cross-linking (peroxide cross-linking) formed by the peroxide-based cross-linking agent. In addition, from the viewpoint of cross-linkability, the peroxide-based cross-linking agent is preferably benzoyl peroxide, di t-butyl peroxide, or dicumyl peroxide, and more preferably dicumyl peroxide. Moreover, from the viewpoint of reactivity, the sulfur-based cross-linking agent is preferably powdered sulfur, precipitated sulfur, highly dispersible sulfur, surface-treated sulfur, inert sulfur, or oil-treated sulfur, among which powdered sulfur or oil-treated sulfur is more preferable, and oil-treated sulfur is further preferable.

In addition, when such a cross-linking agent for rubber is contained, it is preferable that a cross-linking aid (vulcanization aid) be further contained. As the cross-linking aid, it is possible to use, for example, a known cross-linking aid (a compound described in paragraph [0088] of International Publication No. WO2018/235961, zinc dimethacrylate, zinc diacrylate, or the like), as appropriate.

In addition, when the cross-linking agent for rubber is contained, it is preferable that a cross-linking accelerator (vulcanization accelerator) be further contained. As the cross-linking accelerator, it is preferable to use a thiazole-based (MBT, MBTS, ZnMBT, or the like), sulfenamide-based (CBS, DCBS,BBS, or the like), guanidine-based (DPG, DOTG, OTBG, or the like), thiuram-based (TMTD, TMTM, TBzTD, TETD, TBTD, TOTN (tetrakis(2-ethylhexyl)thiuram disulfide), or the like), dithiocarbamate-based (ZTC, NaBDC, or the like), thiourea-based (ETU or the like), xanthate-based (ZnBX or the like) cross-linking accelerator (vulcanization accelerator), or the like.

In addition, when such a cross-linking agent for rubber is used, it is preferable to use a cross-linking acceleration aid (vulcanization acceleration aid) in combination. As the cross-linking acceleration aid, it is also preferable that zinc oxide (for example, type III zinc oxide); a fatty acid such as stearic acid, acetyl acid, propionic acid, butanoic acid, acrylic acid, or maleic acid; a fatty acid zinc salt such as zinc acetylate, zinc propionate, zinc butanoate, zinc stearate, zinc acrylate, or zinc maleate, or the like be contained together with a sulfur-based cross-linking agent.

Note that when a silane-based cross-linking agent is used as the cross-linking agent for rubber, a silane compound may be graft copolymerized in the uncross-linked rubber for silane cross-linking of the rubber. The silane compound

15

preferably has a group which can react with the uncross-linked rubber and an alkoxy group which forms a cross-linkage by silanol condensation. As such a silane compound, known ones (for example, those described in International Publication No. WO 2019/027022) can be used, as appropriate. In addition, when the silane compound is graft copolymerized in the uncross-linked rubber, a known method (for example, a method in which predetermined amounts of the silane compound and a free-radical generator are mixed with the uncross-linked rubber followed by melt kneading at a temperature of 80 to 200°C) can be used, as appropriate. Note that the silane-based cross-linking agent is more preferably a polysilane from the viewpoint of cross-linkability.

In addition, the amount of the cross-linking agent for rubber (vulcanization agent) contained is preferably 0.1 to 10 parts by mass (more preferably 0.1 to 5 parts by mass) relative to 100 parts by mass of the uncross-linked rubber. If the amount of the cross-linking agent for rubber contained (the amount used) is less than the lower limit, the cross-linking density after cross-linking is so low that the physical properties tend to be lowered. Meanwhile, if the amount exceeds the upper limit, the cross-linking density is so high that the physical properties tend to be lowered.

In addition to the above-described components, other additives usable for rubber compositions can be used in the rubber composition of the present invention, as appropriate, according to the application. As the additives, known additives that can be contained in rubber compositions can be used, as appropriate, and examples thereof include, but are not particularly limited to, various components such as polymers other than the uncross-linked rubbers, the polymer components, the styrene block copolymers having no chemical-bond cross-linking moiety, and the α-olefin-based polymers having no chemical-bond cross-linking moiety; reinforcing agents other than the above-described silicas, carbon blacks, and clays (for example, hydrogen-bonding bulking agents, bulking agents to which amino groups are introduced (amino group-introduced bulking agents), and the like); amino group-containing compounds other than the amino group-introduced bulking agents; metal element-containing compounds (metal salts); maleic anhydride-modified polymers; anti-aging agents; antioxidants; pigments (dyes); plasticizers (softening agents); thixotropy-imparting agents; ultraviolet absorbers; flame retardants; solvents; surfactants (including leveling agents); oils other than the above-described process oils; dispersing agents; dehydrating agents; corrosion inhibitors; tackiness agents; antistats; fillers; lubricants; processing aids; slip agents; ultraviolet absorbers; light stabilizers; electrical conductivity-imparting agent; antistats; dispersing agents; flame retardants; antibacterial agents; neutralizers; softening agents; bulking agents; colorants; and thermally conductive bulking agents. Note that such additives and the like are not particularly limited, and it is possible to use those generally used (known ones: for example, those described in paragraphs [0169] to [0174] of JP 5918878 B, those exemplified in Japanese Unexamined Patent Application Publication No. 2006-131663, and the like), as appropriate.

Note that after cross-linked, the rubber composition of the present invention can exhibit excellent heat aging resistance. In the rubber composition of the present invention, an anti-aging agent may further be used as an additive according to the use or the like, because the heat aging resistance can be further improved. When an anti-aging agent is used as the additive as described above, a known one which can be used for rubber compositions can be used, as appropriate. Examples of such anti-aging agents include hindered phenol-based compounds, aliphatic and aromatic hindered amine-based compounds, quinoline-based compounds, and the like. The amount of the anti-aging agent contained is preferably 0.1 to 10 parts by mass (more preferably 1 to 5 parts by mass) relative to 100 parts by mass of the uncross-linked rubber.

In addition, the rubber composition of the present invention may contain an antioxidant as the additive. The antioxidant is not particularly limited, and a known antioxidant can be used, as appropriate. For example, it is possible to use butylhydroxytoluene (BHT), butylhydroxyanisole (BHA), or the like. In addition, the amount of the antioxidant contained is preferably 0.1 to 10 parts by mass (more preferably 1 to 5 parts by mass) relative to 100 parts by mass of the uncross-linked rubber.

Moreover, the rubber composition of the present invention may contain a pigment as the additive. The pigment is not particularly limited, and it is possible to use, for example, an inorganic pigment such as titanium dioxide, zinc oxide, ultramarine, red iron oxide, lithopone, lead, cadmium, iron, cobalt, aluminum, a hydrochloride, or a sulfate, an organic pigment such as an azo pigment or a copper phthalocyanine pigment, or the like, as appropriate. In addition, the amount of the pigment contained is preferably 0.1 to 10 parts by mass, and more preferably 1 to 5 parts by mass relative to 100 parts by mass of the uncross-linked rubber.

There is no particular limitation on the method for producing such a rubber composition of the present invention, and, for example, a production method may be employed in which the uncross-linked rubber having no hydrogen-bond cross-linkable moiety is mixed with the above-described polymer component. For the mixing (kneading), a known kneading machine (for example, a kneader, a pressure kneader, a Banbury mixer, a single-screw extruder, a twin-screw extruder, or the like) or the like can be used, as appropriate. In addition, in such mixing, the order of adding the components and the mixing method are not particularly limited.

In addition, it is preferable to employ, as the method for producing such a rubber composition of the present invention, a method in which the rubber composition of the present invention is obtained by mixing (kneading) a thermoplastic polymer composition containing the polymer component; with the uncross-linked rubber having no hydrogen-bond cross-linkable moiety; such that the amount of the polymer component contained is 0.01 to 200 parts by mass relative to 100 parts by mass of the uncross-linked rubber (hereinafter, this method is simply referred to as "production method (I)" for convenience). Hereinafter, the production method (I) is briefly described. Here, the "thermoplastic polymer composition" used in the production method (I) is first described.

<Regarding Thermoplastic Polymer Composition Used in Production Method (I)>

The thermoplastic polymer composition is not particularly limited, as long as the polymer component is contained. From the viewpoint that mechanical properties such as resistance to compression set and tensile properties can be further improved, the thermoplastic polymer composition contains the polymer component in an amount of preferably 2% by mass or more, more preferably 3% by mass to 99% by mass, further preferably 4% by mass to 90% by mass, and particularly preferably 4% by mass to 80% by mass. Note that the thermoplastic polymer composition used in the production method (I) can contain additional components that can be contained in polymer compositions, as appropriate, together with the polymer component. Preferred examples of the additional components that can be contained in the thermoplastic polymer composition include, but are not particularly limited to, the above-described process oil, the styrene block copolymer having no chemical-bond cross-linking moiety, the α-olefin-based polymer having no chemical-bond cross-linking moiety, the clay, the above-described various additives, and the like. In addition, the thermoplastic polymer composition more preferably contains the process oil (more preferably a paraffin oil), the styrene block copolymer having no chemical-bond cross-linking moiety, and the α-olefin-based polymer having no chemical-bond cross-linking moiety in addition to the polymer component.

When the thermoplastic polymer composition contains a process oil (more preferably a paraffin oil), the amount (content ratio) of the process oil contained is not particularly limited, and is preferably 1 to 12000 parts by mass relative to 100 parts by mass of the polymer component in the thermoplastic polymer composition.

Moreover, when the thermoplastic polymer composition contains a styrene block copolymer, the amount (content ratio) of the thermoplastic polymer composition contained is not particularly limited, and is preferably 1 to 5000 parts by mass relative to 100 parts by mass of the polymer component in the thermoplastic polymer composition.

Note that, from the viewpoint of the balance between formability and mechanical properties, the thermoplastic polymer composition more preferably contains a combination of a styrene block copolymer having no chemical-bond cross-linking moiety and a process oil (more preferably a paraffin oil) together with the polymer component.

When the thermoplastic polymer composition contains an α-olefin-based polymer having no chemical-bond cross-linking moiety, the amount of the α-olefin-based polymer contained is not particularly limited, and it is more preferable to use the α-olefin-based polymer such that the amount thereof is 300 parts by mass or less (further preferably 250 parts by mass or less) relative to 100 parts by mass of the polymer component in the thermoplastic polymer composition.

In addition, the thermoplastic polymer composition may contain the above-described clay. The amount of the clay contained in the thermoplastic polymer composition is preferably 20 parts by mass or less, and more preferably 0.01 to 10 parts by mass relative to 100 parts by mass of the polymer component.

In addition, the method for producing such a thermoplastic polymer composition is not particularly limited, and only needs to be a method that enables a reaction product of the maleic anhydride graft-modified thermoplastic polymer and the cross-linkable compound to be contained in the composition. Regarding the method, the thermoplastic polymer composition containing the polymer component may be produced by reacting the maleic anhydride graft-modified thermoplastic polymer with the cross-linkable compound, for example, by employing the same method as that described in paragraphs [0181] to [0215] of Japanese Unexamined Patent Application Publication No. 2016-193970, except that "the maleic anhydride graft-modified thermoplastic polymer" is used as the "polymer having a cyclic acid anhydride group in a side chain" described in the Patent Application Publication and that "the cross-linkable compound" is used as the "raw material compound" described in the Patent Application Publication.

In addition, as the method for producing such a thermoplastic polymer composition, it is preferable to employ, for example, a method in which the polymer composition containing the polymer component is obtained by mixing the maleic anhydride graft-modified thermoplastic polymer, the cross-linkable compound, and, if necessary, additional components (the styrene block copolymer having no chemical-bond cross-linking moiety, the process oil, the α-olefin-based polymer having no chemical-bond cross-linking moiety, the clay, and the like). When such a method is used, the maleic anhydride graft-modified thermoplastic polymer and the cross-linkable compound can be reacted with each other during the mixing, and, during the reaction, a maleic anhydride group of the maleic anhydride graft-modified thermoplastic polymer can undergo ring-opening and form a chemical bond with the cross-linkable compound. For this reason, this enables efficient formation of the intended "at least one polymer component selected from the group consisting of polymers (A) and polymers (B)" depending on the type of the component.

In addition, when a maleic anhydride graft-modified thermoplastic polymer is reacted with the cross-linkable compound by the above-described method, the amount of the cross-linkable compound used is preferably 0.1 to 10 parts by mass, and further preferably 0.2 to 5.0 parts by mass relative to 100 parts by mass of the maleic anhydride graft-modified thermoplasticity polymer. If the amount of the cross-linkable compound added (amount in parts by mass) is less than the lower limit, the amount of the cross-linkable compound is so small that the cross-linking density does not increase, and desired physical properties tend not to be expressed. Meanwhile, if the amount exceeds the upper limit, the amount is so large that many branches tend to be formed (the amount of the cross-linkable compound is so large that the ratio of the cross-linkable compound not participating in the cross-linking increases), and the cross-linking density tends to be lowered.

In addition, the temperature condition under which the maleic anhydride graft-modified thermoplastic polymer and the cross-linkable compound are reacted with each other (the maleic anhydride group undergoes the ring-opening) in such a method is not particularly limited, and may be adjusted to a temperature at which the reaction therebetween can occur according to the type of the cross-linkable compound and the like. For example, the temperature condition is preferably 100 to 250°C, and more preferably 120 to 230°C, from the viewpoint that the reaction is allowed to proceed in a moment by softening. In addition, there is no particular limitation on the method for conducting such a reaction, and a mixing method such as a known mixing method using rolls, a kneader, or the like can be employed, as appropriate. Moreover, when additional components are added, the order of adding the components and the like are not particularly limited, and may be changed, as appropriate, according to the types of the components used.

The thermoplastic polymer composition used in the production method (I) has been described above. Hereinafter, the steps of the production method (I) are briefly described.

<Regarding Steps of Production Method (I)>

In the production method (I), the thermoplastic polymer composition and the uncross-linked rubber having no hydrogen-bond cross-linkable moiety are mixed such that the amount of the polymer component (the component in the thermoplastic polymer composition) contained is 0.01 to 200 parts by mass relative to 100 parts by mass of the uncross-linked rubber, to thereby obtain the rubber composition of the present invention.

Such a method for mixing the uncross-linked rubber having no hydrogen-bond cross-linkable moiety and the thermoplastic polymer composition is not particularly limited, and a known method or the like can be employed, as appropriate. For example, it is possible to employ a mixing method using a Banbury mixer, rolls, a kneader, an extruder, an all-purpose mixer, or the like.

In addition, the mixing step preferably includes mixing the rubber having no hydrogen-bond cross-linkable moiety and the thermoplastic polymer composition such that the amount of the polymer component, which is a component in the thermoplastic polymer composition, contained is 0.01 to 200 parts by mass (more preferably 0.1 to 150 parts by mass, and further preferably 1 to 100 parts by mass) relative to 100 parts by mass of the uncross-linked rubber having no hydrogen-bond cross-linkable moiety. If the amount of the polymer component contained is less than the lower limit, the rubber composition finally obtained contains a smaller amount of the polymer component, so that the rubber composition of the present invention cannot be obtained, and sufficient performance tends not to be exhibited even if the resulting composition is cross-linked. Meanwhile, if the amount exceeds the upper limit, the rubber composition finally obtained contains too large an amount of the polymer component, so that the rubber composition of the present invention cannot be obtained, and the physical properties of the polymer component tend to be exhibited to a greater extent in the resulting composition.

In addition, the mixing step preferably includes plasticizing and mixing the uncross-linked rubber having no hydrogen-bond cross-linkable moiety and the thermoplastic polymer composition. Such a plasticizing method is not particularly limited, and a known method can be employed, as appropriate. It is more preferable to conduct the mixing (kneading) under a temperature condition of 100 to 250°C (more preferably 120 to 230°C). If the temperature is lower than the lower limit, it tends to be difficult to sufficiently disperse the components (it tends to be difficult to uniformly mix and disperse the components). Meanwhile, if the temperature exceeds the upper limit, degradation tends to occur.

In the thus obtained rubber composition, the amounts of the uncross-linked rubber having no hydrogen-bond cross-linkable moiety, the polymer component, and the clay contained are the same as the amounts of these components described for the rubber composition of the present invention. Note that when the thus obtained rubber composition is made to contain the above-described process oil, the styrene block copolymer having no chemical-bond cross-linking moiety, the α-olefin-based polymer having no chemical-bond cross-linking moiety, the clay, the above-described additives, and the like, the amounts thereof contained in the rubber composition finally obtained are preferably adjusted, as appropriate, so that the amounts can be the same as the amounts of the components, which are already described as the components in the rubber composition of the present invention, contained (note that, in the case where the additives are contained in advance in the thermoplastic polymer composition, it is preferable to make an adjustment, as appropriate, so that the amounts of the additives contained in the rubber composition finally obtained can be the same as the amounts of the components, which are already described as the components in the rubber composition of the present invention, contained). As described above, by adjusting the amounts of the raw materials (components) used in the production of the rubber composition, as appropriate, the components can be easily contained in the amounts as described above.

Moreover, when the rubber composition is prepared as described above, the above-described cross-linking agent for rubber (vulcanization agent) may be further contained. The order of adding the cross-linking agent for rubber is not particularly limited. However, from the viewpoint of obtaining the composition in an uncross-linked state, it is preferable to mix the thermoplastic polymer composition and the uncross-linked rubber having no hydrogen-bond cross-linkable moiety to thereby obtain a mixture, and then add the cross-linking agent for rubber to the resulting mixture followed by kneading under a temperature condition of 20 to 150°C (an optimum temperature condition may be selected, as appropriate, within the temperature range according to the types of the cross-linking agent for rubber (vulcanization agent) and the uncross-linked rubber having no hydrogen-bond cross-linkable moiety so that the cross-linking reaction (vulcanization reaction) cannot proceed). The method for kneading the cross-linking agent for rubber is not particularly limited, and a known method can be employed, as appropriate. For example, it is possible to employ a method in which the cross-linking agent for rubber is added into the mixture and the mixture is kneaded by using a kneading machine such as a Banbury mixer, a kneader, or open rolls.

The applications of the rubber composition are not particularly limited, and the rubber composition can be used, as appropriate, for known applications for which rubber compositions can be used (for example, the applications of rubber compositions described in paragraphs [0151] and [0152] of International Publication No. WO 2019/027022 and the like). Note that another application of the rubber composition may be a raw material for producing, for example, daily necessities, automotive parts (for example, rubber parts in engine rooms such as hoses, belts, bushings, and mounts), electrical appliances, rubber parts such as industrial parts, rubber for building materials, sound insulation rubber, rubber for automotive interior materials (instrument panels and the like), rubber for tires, and the like. Among others, the rubber composition can be preferably used as a material for forming rubber for building materials, sound insulation rubber, rubber for automotive interior materials (instrument panels and the like), and rubber for tires or the like.

[Cross-Linked Rubber Composition]

A cross-linked rubber composition of the present invention is a cross-linking reaction product of the above-described rubber composition of the present invention, and has a type A durometer hardness of 0 to 70 as measured under a temperature condition of 20±5°C in accordance with JIS K6253-3: 2012.

The method for producing the cross-linking reaction product of the rubber composition is not particularly limited. For example, when the rubber composition before cross-linking contains the cross-linking agent for rubber (vulcanization agent), a formation method can be employed in which the rubber molecules are cross-linked by heating the rubber composition before cross-linking to a temperature at which a cross-linking reaction proceeds between the uncross-linked rubber having no hydrogen-bond cross-linkable moiety and the cross-linking agent for rubber in the composition, as appropriate, according to the type and blending ratio of the cross-linking agent for rubber, to thereby cause a reaction between at least the uncross-linked rubber having no hydrogen-bond cross-linkable moiety and the cross-linking agent for rubber in the composition. As described above, the cross-linked rubber composition of the present invention is obtained by cross-linking the rubber composition of the present invention, and is a composition containing the cross-linked product of the uncross-linked rubber (cross-linked rubber: vulcanized rubber), which is a reaction product of the uncross-linked rubber having no hydrogen-bond cross-linkable moiety and the cross-linking agent for rubber.

The cross-linked rubber composition of the present invention has a type A durometer hardness of 0 to 70 (more preferably 0 to 65, and further preferably 0 to 60), as measured under a temperature condition of 20±5°C in accordance with JIS K6253-3: 2012. If the type A durometer hardness (JIS-A hardness) exceeds the upper limit, the hardness is so high that the rubber elasticity decreases. Note that such a type A durometer hardness (JIS-A hardness) can be achieved easily by causing the rubber composition to contain the cross-linked product of the uncross-linked rubber having no hydrogen-bond cross-linkable moiety and the above-described specific polymer component (in some cases, by mixing the polymer component and additional components depending on the type of the polymer component). As a method for measuring the value of such a type A durometer hardness (JIS-A hardness), a measurement method in accordance with JIS K6253-3 (JIS K6253-3:2012) published in 2012 under a temperature condition of 20±5°C may be employed, and, for example, the following measurement method can be employed. Specifically, first, a 2 mm thick sheet made of the cross-linked rubber composition is prepared, and disk-shaped sheets having a diameter of 29 mm are punched out from the sheet. Four or more of the obtained disk-shaped sheets are stacked on one another to a height (thickness) or 6.0 mm or higher to thereby prepare a sample for measurement. Then, by using the sample for measurement and by using an A-type durometer (durometer A hardness-measuring apparatus), the hardness is measured at five sites on the surface of the sample for measurement under a temperature condition of 20±5°C in accordance with JIS K6253-3 (published in 2012) (note that, for the measurement, it is preferable to conduct the measurement of the hardness at each site of measurement three seconds after the contact of the pressure plate), and the hardness is determined as the average value of the obtained hardness values at the five sites. Such a method can be employed.

Note that the conditions for the cross-linking reaction for obtaining the cross-linking reaction product of the rubber composition are not particularly limited, and known conditions can be employed, as appropriate. The conditions may be set, as appropriate, according to the types of the uncross-linked rubber having no hydrogen-bond cross-linkable moiety, the cross-linking agent for rubber (vulcanization agent), and the like in the rubber composition of the present invention. For example, the conditions may be such that heating is conducted at a temperature of 20 to 230°C for 1 to 60 minutes (note that, regarding the temperature, an optimum temperature may be selected within the above-described temperature range, as appropriate, according to the types of the cross-linking agent for rubber and the uncross-linked rubber having no hydrogen-bond cross-linkable moiety so that the cross-linking reaction can proceed sufficiently). Note that the cross-linking reaction product of the rubber composition may be prepared by allowing the cross-linking reaction to proceed, while shaping the rubber composition, as appropriate, according to the application. The shaping method is not particularly limited, either, and a known shaping method (for example, a known method such as press molding using a press machine or shaping by cutting using a cutting machine) may be employed, as appropriate, according to the application and the target design. Note that the cross-linking formed in the cross-linking reaction product of the rubber composition is preferably cross-linking formed by using a peroxide-based cross-linking agent (peroxide cross-linking) from the viewpoint of heat aging resistance, and is preferably cross-linking formed using a sulfur-based cross-linking agent from the viewpoint of further improvement in physical properties (in particular, elongation at break).

The cross-linked rubber composition of the present invention can be preferably used as what are called rubber parts for industrial use (for example, rubber parts in various automotive products, rubber parts used in industrial machines, and the like, as well as those described in paragraph [0157] of International Publication No. WO 2019/027022, and the like). In addition, examples of the rubber parts for industrial use also include daily necessities, automotive parts (for example, rubber parts in engine rooms such as hoses, belts, bushings, and mounts), electrical appliances, industrial parts, rubber parts for building materials, sound insulation rubbers, rubbers for automotive interior materials (instrument panels and the like), rubber for tires, and the like.

[Examples]

Hereinafter, the present invention is described more specifically based on Examples and Comparative Examples, but the present invention is not limited to the following examples.

[Regarding Maleic Anhydride-Modified Thermoplastic Polymers Used in Synthesis Examples]

Table 1 shows abbreviated names, polymer types, properties, and the like of maleic anhydride-modified thermoplastic polymers used in Synthesis Examples described below. In addition, the "maleation ratio" described in Table 1 provides values determined by employing the [Measurement Method of Maleation Ratio] described above (Note that, for the titration, an automatic potentiometric titrator manufactured by KYOTO ELECTRONICS MANUFACTURING CO., LTD. under the trade name of "AT-710M" was used, and an 0.1 mol/L potassium hydroxide solution in ethanol manufactured by Merck KGaA under the trade name of "potassium hydroxide solution in ethanol was used." The correction value (factor) of the 0.1 mol/L potassium hydroxide solution in ethanol used as described above was 1.00 according to the certificate of analysis of the solution). Note that the "melting point" described in Table 1 provides values measured by using approximately 0.01 g of each polymer and using a differential scanning calorimeter (manufactured by Hitachi High-Tech Science Corporation under the trade name of "DSC7000X") at a rate of temperature rise of 10°C/min (values determined by differential scanning calorimetry (DSC)).

[Table 1]

| Polymer Type | Type of Modification | Trade Name (Manufacturer) | Maleation Ratio (% by mass) | Melting Point [Softening Point] (°C) | Abbreviation |
|---|---|---|---|---|---|
| Maleated EPDM | Graft Modification | FUSABOND N416 (DuPont de Nemours, Inc.) | 0.90 | 43 | TP (1) |
| Maleated EOM | Graft Modification | FUSABOND N493 (DuPont de Nemours, Inc.) | 0.50 | 50 | TP (2) |
| Maleated EPM | Graft Modification | TAFMER MP0620 (Mitsui Chemicals, Inc.) | 0.80 | 57 | TP (3) |

(continued)

| Polymer Type | Type of Modification | Trade Name (Manufacturer) | Maleation Ratio (% by mass) | Melting Point [Softening Point] (°C) | Abbreviation |
|---|---|---|---|---|---|
| Maleated SEBS | Graft Modification | Tuftec M1943 (Asahi Kasei Chemicals Corporation) | 0.975 | 39 | TP (4) |
| Maleated PP | Graft Modification | UMEX 1001 (Sanyo Chemical Industries, Ltd.) | 2.21 | 153 | TP (5) |
| Maleated BR | Graft Modification | RICON 184MA6 (Sartomer) | 6.50 | Liquid | TP (6) |
| Maleated E-EA 13% [Component for Comparison] | Copolymerization | Lotader TX8030 (Arkema) | 2.80 | 65 | TP (7) |

(Synthesis Examples 1 to 12)

In each of Synthesis Examples 1 to 12, a thermoplastic polymer composition was produced by employing "Step of Producing Thermoplastic Polymer Composition" described later, with the amounts of components used being adjusted to achieve the composition described in Table 2 below. Note that the numeric values of each composition in Table 2 below are converted values (parts by mass), where the amount of the maleic anhydride-modified thermoplastic polymer (one of the TPs (1) to (7)) used in the corresponding Synthesis Example is regarded as 100 parts by mass. Note that the amount of the maleic anhydride graft-modified thermoplastic polymer used in Synthesis Example was 4 g in each of Synthesis Examples 1 and 2 and Synthesis Example 12, 8 g in each of Synthesis Example 3 and 4, 60 g in each of Synthesis Examples 5 and 6, or 65 g in each of Synthesis Examples 7 to 11.

<Step of Producing Thermoplastic Polymer Composition>

First, a styrene-ethylene-butylene-styrene block copolymer (manufactured by KRATON CORPORATION under the trade name of "G1633U", molecular weight: 400,000 to 500,000, styrene content: 30% by mass: hereinafter sometimes referred to as "SEBS") was put into a pressure kneader, and while mixing under the condition of 180°C, paraffin oil (manufactured by ENEOS Corporation (formerly "JXTG Nippon Oil & Energy Corporation") under the trade name of "300HV-S(J)") was added dropwise into the pressure kneader, and the SEBS and the paraffin oil were mixed for 1 minute. Next, a maleic anhydride-modified thermoplastic polymer (one of the TPs (1) to (7) described in Table 1), an $\alpha$-olefin-based polymer (one of ethylene-butene copolymer (manufactured by Mitsui Chemicals, Inc. under the trade name of "TAFMER DF7350": hereinafter sometimes referred to as "EBM"), and a high-density polyethylene (manufactured by Japan Polyethylene Corporation under the trade name of "HJ590N": hereinafter sometimes referred to as "HDPE")) were further added to the pressure kneader, followed by plasticization by mixing (kneading) at 180°C for 2 minutes to obtain a mixture (A). After that, one of the following steps (I) and (II):

[step (I)]
a step of adding a cross-linkable compound directly to the mixture (A) followed by mixing (kneading) at 180°C for 8 minutes;
[step (II)]
a step of adding a clay (manufactured by HOJUN Co., Ltd. under the trade name of "S-BEN WX": an organically modified clay) to the mixture (A) followed by mixing (kneading) at 180°C for 4 minutes, and then adding a cross-linkable compound followed by mixing (kneading) at 180°C for 8 minutes;
was carried out, to thereby produce a thermoplastic polymer composition. Note that the mixture (A) was obtained and then the step (I) was caried out in Synthesis Examples 1, 3, 5, 11, and 12, while the mixture (A) was obtained and then the step (II) was carried out in Synthesis Examples 2, 4, and 6 to 10. Here, on the basis of the type of the maleic anhydride-modified thermoplastic polymer, it is obvious that the reaction product of the maleic anhydride-modified thermoplastic polymer and the cross-linkable compound in each Synthesis Example had a glass-transition point of 25°C or below. Note that since neither an SEBS nor a paraffin oil was used in Synthesis Examples 5 to 11, the step of mixing an SEBS and a paraffin oil was eliminated. In addition, since no $\alpha$-olefin-based polymer was used in Synthesis Examples 5 to 11, only a maleic anhydride-modified thermoplastic polymer was added to the pressure kneader in the step of adding a maleic anhydride-modified thermoplastic polymer and an $\alpha$-olefin-based polymer. Moreover, in the above-described steps (I) and (II), one of the following Cross-Linkable Compounds (1) to (3):

- Cross-Linkable Compound (1): benzoguanamine (manufactured by Nippon Shokubai Co., Ltd. under the trade name of "benzoguanamine"),
- Cross-Linkable Compound (2): tris(2-hydroxyethyl) isocyanurate (manufactured by NISSEI CORPORATION under the trade name of "TANAC P"),
- Cross-Linkable Compound (3): 3-amino-1,2,4-triazole (manufactured by Tokyo Chemical Industry Co., Ltd.)

was used as the cross-linkable compound to achieve the compositions described in Table 2.

[Table 2]

| | | | Synthesis Example 1 | Synthesis Example 2 | Synthesis Example 3 | Synthesis Example 4 | Synthesis Example 5 | Synthesis Example 6 | Synthesis Example 7 | Synthesis Example 8 | i Synthesis Example 9 | Synthesis Example 10 | Synthesis Example 11 | Synthesis Example 12 |
|---|---|---|---|---|---|---|---|---|---|---|---|---|---|---|
| Composition (parts by mass) | Maleic Anhydride-Modified Thermoplastic Polymer | Maleated EPDM [Abbreviation: TP (1)] | 100 | 100 | - | - | - | - | - | - | - | - | - | - |
| | | Maleated EOM [Abbreviation: TP (2)] | - | - | 100 | 100 | - | - | - | - | - | - | - | - |
| | | Maleated EPM [Abbreviation: TP (3)] | - | - | - | - | 100 | 100 | - | - | - | - | - | - |
| | | Maleated SEBS [Abbreviation: TP (4)] | - | - | - | - | - | - | 100 | - | - | - | 100 | - |
| | | Maleated PP [Abbreviation: TP (5)] | - | - | - | - | - | - | - | 100 | - | - | - | - |
| | | Maleated BR [Abbreviation: TP (6)] | | | - | - | - | - | - | - | 100 | 100 | - | - |
| | | Maleated E-EA 13% [Abbreviation: TP (7), Component for Comparison] | - | | - | - | - | - | - | - | - | - | - | 100 |
| | | Benzoguanamine [Cross-Linkable Compound (1)] | 0.86 | - | - | 0.48 | 0.76 | - | - | - | 9.55 | - | - | 2.94 |

(continued)

| | | | Synthe-sis Example 1 | Synthe-sis Example 2 | Synthe-sis Example 3 | Synthe-sis Example 4 | Synthe-sis Example 5 | Synthe-sis Example 6 | Synthe-sis Example 7 | Synthe-sis Example 8 | i Synthe-sis Example 9 | Synthe-sis Example 10 | Synthe-sis Example 11 | Synthe-sis Example 12 |
|---|---|---|---|---|---|---|---|---|---|---|---|---|---|---|
| Cross-Linka-ble Com-pound | Tris(2-hydrox-yethyl) Isocya-nurate [Cross-Linkable Com-pound (2)] | | - | 0.96 | 0.40 | - | - | 0.78 | 1.77 | 4.44 | - | 8.89 | - | - |
| | 3-Amino-1,2,4-triazole [Cross-Linkable Compound (3)] | | - | - | - | - | - | - | - | - | - | - | 0.86 | - |
| Clay (Organically Modified Clay) | | | - | 0.1 | - | 0.1 | - | 0.1 | 0.1 | 0.1 | 0.1 | 0.1 | - | - |
| Paraffin Oil | | | 1000 | 1200 | 500 | 400 | - | - | - | - | - | - | - | 1000 |
| Styrene Block Copolymer | SEBS | | 300 | 300 | 200 | 200 | - | - | - | - | - | - | - | 300 |
| α-Olefin-based Polymer | EBM | | 75 | 50 | - | - | - | - | - | - | - | - | - | 75 |
| | HDPE | | - | - | 50 | 75 | - | - | - | - | - | - | - | - |
| Abbreviati on of Thermoplastic Polymer Composition Produced | | | TPC (1) | TPC (2) | TPC (3) | TPC (4) | TPC (5) | TPC (6) | TPC (7) | TPC (8) | TPC (9) | TPC (10) | TPC (11) | TPC (12) |

On the basis of the types of the maleic anhydride-modified thermoplastic polymers described in Table 1 and the compositions shown in Table 2, it is obvious that the thermoplastic polymer compositions (TPCs (1) to (11)) obtained in Synthesis Examples 1 to 11 each contain a polymer component consisting of a reaction product of a maleic anhydride graft-modified thermoplastic polymer having a maleation ratio of 0.1 to 10% by mass and a cross-linkable compound. In the thermoplastic polymer composition (TPC (12)) obtained in Synthesis Example 12, on the other hand, the maleic anhydride-modified thermoplastic polymer was a modified product of a copolymerization type, and hence it is obvious that the polymer component contained in the composition comprised a reaction product of a maleic anhydride-modified thermoplastic polymer of a copolymerization type having a maleation ratio of 0.1 to 10% by mass (component for comparison) and a cross-linkable compound.

(Examples 1 to 8)

In each of Examples 1 to 8, a cross-linked rubber composition was produced by employing "Step of Producing Rubber Composition" and "Step of Producing Cross-Linked Rubber Composition" described later, while the amounts of components used were adjusted to achieve the composition described in Table 3 below. Note that the numeric values of the compositions in Table 3 below are values (parts by mass) converted with the amount of an uncross-linked rubber (EPDM: ethylene-propylene-diene copolymer manufactured by Mitsui Chemicals, Inc. under the trade name of "3092PM") shown in Table 3 used being taken as 100 parts by mass. In each Example, the amount of the uncross-linked rubber used was 80 g.

<Step of Producing Rubber Composition>

First, as a component used for preparing rubber composition, a powder material was prepared which was made of a powder mixture of carbon black (manufactured by Cabot Corporation under the trade name of "CB N550"), zinc oxide (type III zinc oxide manufactured by HAKUSUI TECH CO., LTD.) serving as a cross-linking acceleration aid, and stearic acid (manufactured by NIPPON FINE CHEMICAL CO., LTD.) serving as a cross-linking acceleration aid.

Next, an ethylene-propylene-diene rubber (manufactured by Mitsui Chemicals, Inc. under the trade name of "3092PM", simply referred to as "EPDM" in the table) serving as an uncross-linked rubber, and a thermoplastic polymer composition (one of the thermoplastic polymer compositions (TPCs (1) to (6)) obtained in Synthesis Examples 1 to 6 was used) were introduced into a pressure kneader (manufactured by Toyo Seiki Seisaku-sho, Ltd. under the trade name of "Labo Plastomill", capacity: 250 mL) heated to 160°C, and plasticized by kneading at a temperature of 160°C and a number of revolutions of 30 rpm for 1 minute. After that, while a half (1/2) of the powder material and the entire paraffin oil were being further added to the pressure kneader, the condition of number of revolutions was changed from 30 rpm to 50 rpm, and kneading was conducted at a temperature of 160°C and at a number of revolutions of 50 rpm for 1.5 minutes. Subsequently, the remaining half (1/2) of the powder material was further added to the pressure kneader, and kneading was conducted at a number of revolutions of 50 rpm for 1.5 minutes. Next, the ram (floating weight) was moved up and down so that a portion of the powder material adhering to the wall surface between the material inlet of the pressure kneader and the kneading chamber of the kneader was introduced to the kneading chamber, and then the mixture in the kneader was further kneaded at a temperature of 160°C and at a number of revolutions of 50 rpm for one minute. Next, the rum (floating weight) was moved up and down again in the pressure kneader, and then the mixture was further kneaded at a temperature of 150°C and at a number of revolutions of 50 rpm for 3 minutes and discharged to obtain a rubber composition. Thus, a rubber composition in the form of containing no cross-linking agent for rubber (vulcanization agent) was obtained.

Next, an open roll machine (roll size: 6 inches in diameter × 18 inches in length, the number of rolls: 2) was used to knead the rubber composition in the form of containing no cross-linking agent for rubber obtained as described above and dicumyl peroxide (manufactured by NOF CORPORATION under the trade name of "PERCUMYL D-40", purity: 40%) serving as the cross-linking agent for rubber, thereby obtaining a rubber composition (uncross-linked: unvulcanized) in the form of containing a cross-linking agent for rubber (hereinafter sometimes the step of kneading a rubber composition in the form of containing no cross-linking agent for rubber and dicumyl peroxide serving as a cross-linking agent for rubber as described above is simply referred to as "step of obtaining a rubber composition in the form of containing a cross-linking agent for rubber"). Note that the conditions employed for the kneading were such that, under a condition of room temperature (25°C), the number of revolutions of the rear roll was 10 rpm, and the rotational ratio (front:rear) between the front and rear rolls was 1:1.1.

<Step of Producing Cross-Linked Rubber Composition>

By using 50 g of the rubber composition (uncross-linked: unvulcanized) in the form of containing a cross-linking agent for rubber obtained as described above, press cross-linking (cross-linking (vulcanization) with simultaneous press molding) was carried out in a press molding machine (manufactured by DUMBBELL CO., LTD.) at 170°C for 10 minutes, to thereby obtain a sheet-shaped cross-linked rubber composition (a rubber sheet made of a cross-linking reaction product of the rubber composition) having a length of 150 mm, a width of 150 mm, and a thickness of 2 mm.

(Comparative Examples 1 and 2)

A sheet-shaped cross-linked rubber composition was obtained in each of the comparative examples in the same manner as in Example 1, except that no thermoplastic polymer composition was used, and that the amounts of components used were adjusted to achieve the composition described in Table 4.

(Comparative Example 3)

A sheet-shaped cross-linked rubber composition was obtained in the same manner as in Example 1, except that an EBM (manufactured by Mitsui Chemicals, Inc. under the trade name of "TAFMER DF7350") was used instead of the thermoplastic polymer composition and that the amounts of components used were adjusted to achieve the composition described in Table 4.

(Comparative Example 4)

A sheet-shaped cross-linked rubber composition was obtained in the same manner as in Example 1, except that a styrenic thermoplastic elastomer (manufactured by Mitsubishi Chemical Corporation under the trade name of "T320C", JIS A hardness: 15) was used instead of the thermoplastic polymer composition, and that the amounts of components used were adjusted to achieve the composition described in Table 4.

(Comparative Example 5)

A sheet-shaped cross-linked rubber composition was obtained in the same manner as in Example 1, except that an olefinic thermoplastic elastomer (manufactured by Mitsui Chemicals, Inc. under the trade name of "Milastomer 6020NS", JIS A hardness: 50 (a value obtained by measuring the hardness 5 seconds after the contact of the pressure application plate)) was used instead of the thermoplastic polymer composition, and that the amounts of components used were adjusted to achieve the composition described in Table 4.

(Comparative Example 6)

A sheet-shaped cross-linked rubber composition was obtained in the same manner as in Example 1, except that the thermoplastic polymer composition (TPC (12)) obtained in Synthesis Example 12 was used as the thermoplastic polymer composition, and that the amounts of components used were adjusted to achieve the composition described in Table 4.

[Characterization of Cross-Linked Rubber Compositions Obtained in Examples 1 to 8 and Comparative Examples 1 to 6]

<Measurement of Hardness (JIS-A Hardness)>

The hardness of the cross-linked rubber composition obtained in each of the examples and the like was measured as follows. Specifically, first, seven disk-shaped sheets having a diameter of 29 mm were punched out from the sheet-shaped cross-linked rubber composition obtained as described above, and four disk-shaped sheets were prepared. After that, the obtained four disk-shaped sheets were stacked on one another to a height (thickness) of 6.0 mm or higher to thereby prepare a sample for measurement. Next, by using a type A durometer (durometer A hardness-measuring apparatus manufactured by TECLOCK corporation under the trade name of "type A durometer GSD-719K"), the hardness was measured at five measurement sites (five measurement locations) on the surface of the sample for measurement under a temperature condition of 20±5°C in accordance with JIS K6253-3 (published in 2012), and the average value of the hardness among all the measurement sites (the average value of the 5 sites) was determined, to thereby determine the JIS A hardness. Note that the hardness measurement at each measurement site was conducted three seconds after the contact of the pressure application plate. Tables 3 and 4 show the obtained results.

<Measurement of Percent Change in 100% Modulus>

Using the cross-linked rubber composition obtained in each of the examples and the like, in accordance with JIS K6251 (published in 2010), a No. 3 dumbbell-shaped test piece was prepared and a tensile test was carried out at a tensile speed of 500 mm/min, to measure the 100% modulus (M100) [MPa]. Note that this measurement was carried out on the test piece both before and after the heat aging test described below. Then, the value of the 100% modulus of the test piece before the heat aging test (100% Mod before test) and the value of the 100% modulus of the test piece after the test (100% Mod after test) were used to make a calculation by using the following formula:

$$[100\% \text{ Mod Percent Change } (\%)] = \{([100\% \text{ Mod after Test}] - [100\% \text{ Mod before Test}]) \div [100\% \text{ Mod before Test}]\} \times 100,$$

to thereby determine the percent change in 100% modulus (100% Mod) value and the absolute value thereof. Tables 3 and 4 shows the obtained results. Note that a smaller absolute value of the percent change in 100% modulus can be considered to indicate a better heat aging resistance (heat resistance).

(Heat Aging Test)

The heat aging test (aging acceleration test for measuring heat aging resistance) employed was a test in which the No. 3 dumbbell-shaped test piece was put into a gear oven and heat aged by being heated for 72 hours under the conditions of an atmospheric gas of air and a temperature of 120°C in accordance with JIS K6257 (published in 2010).

<Test for Checking Presence or Absence of Oil Bleeding>

By using the cross-linked rubber composition obtained in each of the examples and the like (sheet having a thickness of 2 mm), the presence or absence of occurrence of oil bleeding was checked as follows. Specifically, first, a sample was prepared by cutting the sheet of the cross-linked rubber composition having a thickness of 2 mm into a 1 cm square. Next, the sample (1 cm square) was allowed to stand on a piece of paper at room temperature for 24 hours. After that the sample was removed from the piece of paper, and whether or not any trace of oil (remaining oil) was present on the piece of paper was visually checked. Then, the presence or absence of occurrence of oil bleeding was determined, where the oil bleeding was determined to be "present", if any trace of oil was present, and the oil bleeding was determined to be "absent", if no trace of oil was detected. Tables 3 and 4 shows the obtained results.

[Table 3]

| | | | Example 1 | Example 2 | Example 3 | Example 4 | Example 5 | Example 6 | Example 7 | Example 8 |
|---|---|---|---|---|---|---|---|---|---|---|
| Composition (parts by mass) | Uncross-Linked Rubber | EPDM | 100 | 100 | 100 | 100 | 100 | 100 | 100 | 100 |
| | Thermoplastic Polymer Composition | TPC (1): Synthesis Example 1 | 25 | 50 | - | - | - | - | - | - |
| | | TPC (2): Synthesis Example 2 | - | - | 25 | 50 | - | - | - | - |
| | | TPC (3): Synthesis Example 3 | - | - | - | - | 50 | - | - | - |
| | | TPC (4): Synthesis Example 4 | - | - | - | - | - | 50 | - | - |
| | | TPC (5): Synthesis Example 5 | - | - | - | - | - | - | 50 | - |
| | | TPC (6): Synthesis Example 6 | - | - | - | - | - | - | - | 50 |
| | Powder Material | Carbon Black | 50 | 50 | 50 | 50 | 50 | 50 | so | 50 |
| | | Zinc Oxide | 5 | 5 | 5 | 5 | 5 | 5 | 5 | 5 |
| | | Stearic Acid | 1 | 1 | 1 | 1 | 1 | 1 | 1 | 1 |
| | Additive | Paraffin Oil | 30 | 30 | 30 | 30 | 30 | 30 | 30 | 30 |
| | Cross-Linking Agent for Rubber | Dicumyl Peroxide | 8 | 8 | 8 | 8 | 8 | 8 | 8 | 8 |
| Results of Characterization of Cross-Linked Rubber Composition | | JIS-A Hardness | 48 | 40 | 49 | 43 | 49 | 49 | 57 | 58 |
| | | Absolute Value of Percent Change in 100% Mod (%) | 2 | 1 | 0 | 0 | 0 | 2 | 2 | 1 |
| | | Presence or Absence of Oil Bleeding | Absent | Absent | Absent | Absent | Absent | Absent | Absent | Absent |

[Table 4]

| | | | Comparative Example 1 | Comparative Example 2 | Comparative Example 3 | Comparative Example 4 | Comparative Example 5 | Comparative Example 6 |
|---|---|---|---|---|---|---|---|---|
| Composition (parts by mass) | Uncross-Linked Rubber | EPDM | 100 | 100 | 100 | 100 | 100 | 100 |
| | Component for Comparison with Thermoplastic Polymer Composition | EBM | - | - | 50 | - | - | - |
| | | Styrenic Thermoplastic Elastomer | - | - | - | 50 | - | - |
| | | Olefinic Thermoplastic Elastomer | - | - | - | - | 50 | - |
| | | TPC (12): Synthesis Example 12 | - | - | - | - | - | 50 |
| | Powder Material | Carbon Black | 50 | 50 | 50 | 50 | 50 | 50 |
| | | Zinc Oxide | 5 | 5 | 5 | 5 | 5 | 5 |
| | | Stearic Acid | 1 | 1 | 1 | 1 | 1 | 1 |
| | Additive | Paraffin Oil | 30 | 55 | 30 | 30 | 30 | 30 |
| | Cross-Linking Agent for Rubber | Dicumyl Peroxide | 8 | 8 | 8 | 8 | 8 | 8 |
| Results of Characterization of Cross-Linked Rubber Composition | | JIS-A Hardness | 60 | 55 | 54 | 52 | 57 | 58 |
| | | Absolute Value of Percent Change in 100% Mod (%) | 5 | 8 | 7 | 5 | 10 | 9 |
| | | Presence or Absence of Oil Bleeding | Absent | Present | Absent | Absent | Absent | Present |

As is apparent from the results shown in Tables 3 and 4, each of the cross-linked rubber compositions obtained in Examples 1 to 8 did not undergo oil bleeding, and had a hardness of 58 or lower. In addition, it was found that each of the cross-linked rubber compositions obtained in Examples 1 to 8 underwent a percent change in 100% modulus of 2% or less before and after the heat aging test, as determined by the absolute value.

In contrast, first, the cross-linked rubber composition obtained in Comparative Example 1 had a hardness of 60. In addition, the cross-linked rubber composition obtained in Comparative Example 1 had a percent change in 100% modulus before and after the heat aging test of 5%, as measured by the absolute value. Note that since the cross-linked rubber compositions obtained in Examples 1 to 8 were different from the cross-linked rubber composition obtained in Comparative Example 1 in terms of the presence or absence of the use of a thermoplastic polymer composition, a comparison therebetween showed that, in the cases (Examples 1 to 8) where one of the thermoplastic polymer compositions TPCs (1) to (6) was used, the hardness was further lowered, enabling such a rubber system to have a sufficiently low hardness, and it was possible to further improve the heat aging resistance based on the percent change in 100% modulus before and after the heat aging test.

In addition, the cross-linked rubber composition obtained in Comparative Example 2 was a composition in which the amount of the paraffin oil contained was 55 parts by mass, and the amount of the paraffin oil contained was larger by 25 parts by mass than that in the composition obtained in Comparative Example 1. In addition, a comparison between the compositions of Comparative Example 1 and Comparative Example 2 showed that, on the basis of the above-described amount of the paraffin oil contained, the hardness of the cross-linked rubber composition obtained in Comparative Example 2 was lowered in comparison with the cross-linked rubber composition obtained in Comparative Example 1 (actually the hardness value was lowered by 5 points). However, the composition obtained in Comparative Example 2 underwent oil bleeding, and hence was not sufficient in terms of lowering the hardness without oil bleeding. In addition, it was found that the cross-linked rubber composition obtained in Comparative Example 2 had a value of the percent change in 100% modulus before and after the heat aging test of 8%, as measured by the absolute value, and the heat aging resistance based on the percent change in 100% modulus before and after the heat aging test of the cross-linked rubber composition obtained in Comparative Example 2 was lower than that of the cross-linked rubber composition obtained in Comparative Example 1.

The cross-linked rubber compositions obtained in Comparative Examples 3 to 5 were compositions using one component for comparison (thermoplastic elastomer) selected from the EBM, the styrenic thermoplastic elastomer, and the olefinic thermoplastic elastomer. In addition, a comparison between Comparative Example 1 and Comparative Examples 3 to 5 showed that when the component for comparison (thermoplastic elastomer) was used, the hardness was successfully lowered in comparison with the cross-linked rubber composition obtained in Comparative Example 1, but the heat aging resistance based on the percent change in 100% modulus before and after the heat aging test was the same as or lower than that of the cross-linked rubber composition obtained in Comparative Example 1. Note that a comparison between the evaluation results of the cross-linked rubber compositions obtained in Comparative Examples 3 to 5 and the evaluation results of the cross-linked rubber compositions obtained in Examples 1 to 8 showed that in the cases (Comparative Examples 3 to 5) where the component for comparison (thermoplastic elastomer) was used, the heat aging resistance based on the percent change in 100% modulus before and after the heat aging test failed to be improved, whereas in the cases (Examples 1 to 8) where one of the thermoplastic polymer compositions TPCs (1) to (6) was used, the heat aging resistance based on the percent change in 100% modulus before and after the heat aging test was successfully improved.

Moreover, the cross-linked rubber composition obtained in Comparative Example 6 was an example where the thermoplastic elastomer composition (TPC (12)) obtained by using not a graft-modified product, but a maleic anhydride-modified thermoplastic polymer of a copolymerization type was used as the component for comparison. When the TPC (12) was used, it was found that an improvement effect on the heat aging resistance based on the percent change in 100% modulus before and after the heat aging test was not obtained, and oil bleeding occurred.

From such results (the results shown in Tables 3 and 4), it was found that the cross-linked rubber compositions obtained in Examples 1 to 8 made it possible to lower the hardness and also sufficiently suppress the occurrence of oil bleeding, and moreover further improve the heat aging resistance without using an anti-aging agent. Note that since the cross-linked rubber compositions obtained in Examples 1 to 8 did not use any anti-aging agent, it was found that the occurrence of what is called "blooming (a phenomenon in which an anti-aging agent is oozing from the composition over time)" was also prevented.

(Examples 9 to 14)

A sheet-shaped cross-linked rubber composition was obtained in each of the examples in the same manner as in Example 1, except that the type of the uncross-linked rubber EPDM was changed to one manufactured by Mitsui Chemicals, Inc. under the trade name of "X-3012P", that the rubber composition in the form of containing no cross-linking agent for rubber, sulfur (oil-treated sulfur manufactured by Tsurumi Chemical Industry Co., ltd. under the trade name of "Kinka-Jirushi oil-containing fine-powder sulfur") serving as a cross-linking agent for rubber, a thiuram-based accelerator (tetrakis(2-ethylhexyl)thiuram disulfide manufactured by OUCHI SHINKO CHEMICAL INDUSTRIAL CO.,LTD. under the trade name of "Nocceler TOTN") serving as a cross-linking accelerator, a dithiocarbamate-based accelerator (zinc dibenzyldithiocarbamate manufactured by OUCHI SHINKO CHEMICAL INDUSTRIAL CO.,LTD. under the trade name of "Nocceler ZTC") serving as a cross-linking accelerator, and a sulfenamide-based accelerator (N-cyclohexyl-2-benzothiazyl sulfenamide manufactured by OUCHI SHINKO CHEMICAL INDUSTRIAL CO.,LTD. under the trade name of "Nocceler CZ") serving as a cross-linking accelerator were kneaded instead of kneading the rubber composition in the form of containing no cross-linking agent for rubber and dicumyl peroxide serving as a cross-linking agent for rubber in the step of obtaining a rubber composition in the form of containing a cross-linking agent for rubber, and that the amounts of components used were adjusted to achieve the composition described in Table 5.

(Comparative Examples 7 and 8)

A sheet-shaped cross-linked rubber composition was obtained in each of the comparative examples in the same manner as in Example 9, except that no thermoplastic polymer composition was used, and that the amounts of components used were adjusted to achieve the composition described in Table 6.

(Comparative Example 9)

A sheet-shaped cross-linked rubber composition was obtained in the same manner as in Example 9, except that a styrenic thermoplastic elastomer (manufactured by Mitsubishi Chemical Corporation under the trade name of "T320C", JIS A hardness: 15) was used instead of the thermoplastic polymer composition, and that the amounts of components used were adjusted to achieve the composition described in Table 6.

(Comparative Example 10)

A sheet-shaped cross-linked rubber composition was obtained in the same manner as in Example 9, except that an olefinic thermoplastic elastomer (manufactured by Mitsui Chemicals, Inc. under the trade name of "Milastomer 6020NS", JIS A hardness: 50 (a value obtained by measuring the hardness 5 seconds after the contact of the pressure application plate)) was used instead of the thermoplastic polymer composition, and that the amounts of components used were adjusted to achieve the composition described in Table 6.

(Comparative Example 11)

A sheet-shaped cross-linked rubber composition was obtained in the same manner as in Example 9, except that an EBM (manufactured by Mitsui Chemicals, Inc. under the trade name of "TAFMER DF7350") was used instead of the thermoplastic polymer composition, and that the amounts of components used were adjusted to achieve the composition described in Table 6.

(Comparative Example 12)

A sheet-shaped cross-linked rubber composition was obtained in the same manner as in Example 9, except that the thermoplastic polymer composition (TPC (12)) obtained in Synthesis Example 12 was used as the thermoplastic polymer composition, and that the amounts of components used were adjusted to achieve the composition described in Table 6.

[Characterization of Cross-Linked Rubber Compositions Obtained in Examples 9 to 14 and Comparative Examples 7 to 12]

<Regarding JIS-A Hardness, Percent Change in 100% Modulus, and Presence or Absence of Oil Bleeding>

For the cross-linked rubber compositions obtained in Examples 9 to 14 and Comparative Examples 7 to 12, the JIS-A hardness and the percent change in 100% modulus were measured and the presence or absence of oil bleeding was checked by employing the same methods as those employed in the above-described "Characterization of Cross-Linked Rubber Compositions Obtained in Examples 1 to 8 and Comparative Examples 1 to 6". Tables 5 and 6 shows the obtained results.

<Measurement of Percent Change in Breaking Strength and Percent Change in Elongation at Break>

Using the cross-linked rubber composition obtained in each of the examples and the like, in accordance with JIS K6251 (published in 2010), a No. 3 dumbbell-shaped test piece was prepared and a tensile test was carried out at a tensile speed of 500 mm/min to measure the breaking strength (TB [Unit: MPa]) and the elongation at break (EB [Unit: %]). Note that the measurement was conducted by using the test piece both before and after the above-described heat aging test.

Then, the percent change in breaking strength was determined from the value of the breaking strength of the test piece before the heat aging test (breaking strength before test) and the value of the breaking strength of the test piece after the heat aging test (breaking strength after test) by making a calculation using the following formula:

$$[\text{Percent Change in Breaking Strength (\%)}] = \{([\text{Breaking Strength after Test}] - [\text{Breaking Strength before Test}]) \div [\text{Breaking Strength before Test}]\} \times 100.$$

Meanwhile, the percent change in elongation at break was determined from the value of the elongation at break of the test piece before the heat aging test (elongation at break before test) and the value of the elongation at break of the test piece after the heat aging test (elongation at break after test) by making a calculation using the following formula:

$$[\text{Percent Change in Elongation at Break (\%)}] = \{([\text{Elongation at Break after Test}] - [\text{Elongation at Break before Test}]) \div [\text{Elongation at Break before Test}]\} \times 100.$$

Tables 5 and 6 shows the absolute values of these percent changes.

[Table 5]

| | | | Example 9 | Example 10 | Example 11 | Example 12 | Example 13 | Example 14 |
|---|---|---|---|---|---|---|---|---|
| Composition (parts by mass) | | Uncross-Linked Rubber | EPDM | 100 | 100 | 100 | 100 | 100 | 100 |
| | Thermoplastic Polymer Composition | TPC (1): Synthesis Example 1 | 50 | - | - | - | - | - |
| | | TPC (2): Synthesis Example 2 | - | 50 | - | - | - | - |
| | | TPC (3): Synthesis Example 3 | - | - | 50 | - | - | - |
| | | TPC (4): Synthesis Example 4 | - | - | - | 50 | - | - |
| | | TPC (5): Synthesis Example 5 | - | - | - | - | 50 | - |
| | | TPC (6): Synthesis Example 6 | - | - | - | - | - | 50 |
| | Powder Material | Carbon Black | 50 | 50 | 50 | 50 | 50 | 50 |
| | | Zinc Oxide | 5 | 5 | 5 | 5 | 5 | 5 |
| | | Stearic Acid | 1 | 1 | 1 | 1 | 1 | 1 |
| | Additive | Paraffin Oil | 30 | 30 | 30 | 30 | 30 | 30 |
| | Cross-Linking Agent for Rubber | Sulfur | 1.00 | 1.00 | 1.00 | 1.00 | 1.00 | 1.00 |
| | Cross-Linking Accelerator | Trade Name "Nocceler TOTN" | 2.00 | 2.00 | 2.00 | 2.00 | 2.00 | 2.00 |
| | | Trade Name "Nocceler ZTC" | 0.50 | 0.50 | 0.50 | 0.50 | 0.50 | 0.50 |
| | | Trade Name "Nocceler CZ" | 1.50 | 1.50 | 1.50 | 1.50 | 1.50 | 1.50 |
| Results of Characterization of Cross-Linked Rubber Composition | | JIS-A Hardness | 60 | 53 | 63 | 61 | 68 | 68 |
| | | Absolute Value of Percent Change in 100% Mod (%) | 1 | 1 | 3 | 2 | 4 | 1 |
| | | Absolute Value of Percent Change in Breaking Strength (%) | 2 | 2 | 1 | 0 | 1 | 1 |
| | | Absolute Value of Percent Change in Elongation at Break (%) | 2 | 6 | 4 | 2 | 6 | 1 |
| | | Presence or Absence of Oil Bleeding | Absent | Absent | Absent | Absent | Absent | Absent |

EP 4 174 129 A1

33

[Table 6]

| | | | Comparative Example 7 | Comparative Example 8 | Comparative Example 9 | Comparative Example 10 | Comparative Example 11 | Comparative Example 12 |
|---|---|---|---|---|---|---|---|---|
| Composition (parts by mass) | Uncross-Linked Rubber | EPDM | 100 | 100 | 100 | 100 | 100 | 100 |
| | Component for Comparison with Thermoplastic Polymer Composition | Styrenic Thermoplastic Elastomer | - | - | 50 | - | - | - |
| | | Olefinic Thermoplastic Elastomer | - | - | - | 50 | - | - |
| | | EBM | - | - | - | - | 50 | - |
| | | TPC (12): Synthesis Example 12 | - | - | - | - | - | 50 |
| | Powder Material | Carbon Black | 50 | 50 | 50 | 50 | 50 | 50 |
| | | Zinc Oxide | 5 | 5 | 5 | 5 | 5 | 5 |
| | | Stearic Acid | 1 | 1 | 1 | 1 | 1 | 1 |
| | Additive | Paraffin Oil | 30 | 80 | 30 | 30 | 30 | 30 |
| | Cross-Linking Agent for Rubber | Sulfur | 1.00 | 1.00 | 1.00 | 1.00 | 1.00 | 1.00 |
| | Cross-Linking Accelerator | Trade Name "Nocceler TOTN" | 2.00 | 2.00 | 2.00 | 2.00 | 2.00 | 2.00 |
| | | Trade Name "Nocceler ZTC" | 0.50 | 0.50 | 0.50 | 0.50 | 0.50 | 0.50 |
| | | Trade Name "Nocceler CZ" | 1.50 | 1.50 | 1.50 | 1.50 | 1.50 | 1.50 |

EP 4 174 129 A1

34

(continued)

| Results of Characterization of Cross-Linked Rubber Composition | | Comparative Example 7 | Comparative Example 8 | Comparative Example 9 | Comparative Example 10 | Comparative Example 11 | Comparative Example 12 |
|---|---|---|---|---|---|---|---|
| | JIS-A Hardness | 70 | 62 | 65 | 68 | 66 | 63 |
| | Absolute Value of Percent Change in 100% Mod (%) | 5 | 7 | 9 | 8 | 8 | 8 |
| | Absolute Value of Percent Change in Breaking Strength (%) | 8 | 4 | 8 | 4 | 8 | 5 |
| | Absolute Value of Percent Change in Elongation at Break (%) | 7 | 8 | 9 | 13 | 15 | 8 |
| | Presence or Absence of Oil Bleeding | Absent | Present | Absent | Absent | Absent | Present |

As is apparent from the results shown in Tables 5 and 6, each of the cross-linked rubber compositions obtained in Examples 9 to 14 did not undergo oil bleeding, and further had a hardness of 68 or lower. In addition, the value of the percent change in 100% modulus before and after the heat aging test of each of the cross-linked rubber compositions obtained in Examples 9 to 14 was 4% or lower, as measured by the absolute value.

In contrast, first, the cross-linked rubber composition obtained in Comparative Example 7 had a hardness of 70. In addition, the value of the percent change in 100% modulus before and after the heat aging test of the cross-linked rubber composition obtained in Comparative Example 7 was 5%, as measured by the absolute value. Note that since the cross-linked rubber compositions obtained in Examples 9 to 14 were different from the cross-linked rubber composition obtained in Comparative Example 7 in terms of the presence or absence of the use of a thermoplastic polymer composition, a comparison therebetween showed that in the cases (Examples 9 to 14) where one of the thermoplastic polymer compositions TPCs (1) to (6) was used, the hardness was further lowered, enabling such a rubber system to have a sufficiently low hardness, and it was possible to further improve the heat aging resistance based on the percent change in 100% modulus before and after the heat aging test.

In addition, the cross-linked rubber composition obtained in Comparative Example 8 was a composition in which the amount of the paraffin oil contained was 80 parts by mass, and the amount of the paraffin oil contained was increased by 50 parts by mass in comparison with the composition obtained in Comparative Example 7. Here, a comparison between the compositions of Comparative Example 7 and Comparative Example 8 showed that the amount of the paraffin oil contained enabled the cross-linked rubber composition obtained in Comparative Example 8 to have a lower hardness than the cross-linked rubber composition obtained in Comparative Example 7 (actually, the value of the hardness was lowered by 8 points). However, the composition obtained in Comparative Example 8 underwent oil bleeding, and was not sufficient in terms of lowering the hardness without oil bleeding. In addition, the value of the percent change in 100% modulus before and after the heat aging test of the cross-linked rubber composition obtained in Comparative Example 8 was 7%, as measured by the absolute value, and it was also found that the heat aging resistance was lowered in comparison with the cross-linked rubber composition obtained in Comparative Example 7.

The cross-linked rubber compositions obtained in Comparative Examples 9 to 11 were compositions using a component for comparison (thermoplastic elastomer) which was one of the styrenic thermoplastic elastomer, the olefinic thermoplastic elastomer, and the EBM, instead of the thermoplastic polymer composition. Here, a comparison between Comparative Example 7 and Comparative Examples 9 to 11 showed that when the components for comparison (thermoplastic elastomers) were used, the hardness was successfully lowered in comparison with the cross-linked rubber composition obtained in Comparative Example 7, but the heat aging resistance based on the percent change in 100% modulus before and after the heat aging test was lower than that of the cross-linked rubber composition obtained in Comparative Example 7.

Moreover, the cross-linked rubber composition obtained in Comparative Example 12 used the thermoplastic elastomer composition (TPC (12)) obtained by using a maleic anhydride-modified thermoplastic polymer of a copolymerization type instead of a graft-modified product. It was found that even when the TPC (12) was used, no improvement effect was obtained on the heat aging resistance based on the percent change in 100% modulus before and after the heat aging test, and the oil bleeding occurred.

From such results (the results shown in Tables 5 and 6), it was found that the cross-linked rubber compositions obtained in Examples 9 to 14 made it possible to obtain a sufficiently low hardness and also sufficiently suppress the occurrence of oil bleeding, and moreover further improve the heat aging resistance without using an anti-aging agent. Note that since no anti-aging agent was used in the cross-linked rubber compositions obtained in Examples 9 to 14, it was found that the occurrence of what is called "blooming (a phenomenon in which an anti-aging agent is oozing from the composition over time)" was also prevented.

Moreover, the value of the percent change in breaking strength before and after the heat aging test of each of the cross-linked rubber compositions obtained in Examples 9 to 14 was 2% or lower as measured by the absolute value, whereas the value of the percent change in breaking strength before and after the heat aging test of each of the cross-linked rubber compositions obtained in Comparative Examples 7 to 12 was 4% or higher as measured by the absolute value. In addition, the value of the percent change in elongation at break before and after the heat aging test of each of the cross-linked rubber compositions obtained in Examples 9 to 14 was 6% or lower as measured by the absolute value, whereas the value of the percent change in elongation at break before and after the heat aging test of each of the cross-linked rubber compositions obtained in Comparative Examples 7 to 12 was 7% or higher as measured by the absolute value. Also from the viewpoints of the percent change in breaking strength and the percent change in elongation at break, it was found that the cross-linked rubber compositions obtained in Examples 9 to 14 were higher in heat aging resistance than the cross-linked rubber compositions obtained in Comparative Examples 7 to 12.

(Examples 15 to 18)

A sheet-shaped cross-linked rubber composition was obtained in each of the examples in the same manner as in Example 1, except that a styrene butadiene rubber (manufactured by Zeon Corporation under the trade name of "Nipol 1502", hereinafter sometimes referred to as "SBR") was used instead of the EPDM, that one of the thermoplastic polymer compositions (TPCs (1) to (3) and (5)) obtained in Synthesis Examples 1 to 3 and 5 was used as the thermoplastic polymer composition, that neither carbon black nor paraffin oil was used, that the rubber composition in the form of containing no cross-linking agent for rubber, sulfur (oil-treated sulfur manufactured by Tsurumi Chemical Industry Co., ltd. under the trade name of "Kinka-Jirushi oil-containing fine-powder sulfur") serving as a cross-linking agent for rubber, a sulfenamide-based accelerator (N-cyclohexyl-2-benzothiazyl sulfenamide manufactured by OUCHI SHINKO CHEMICAL INDUSTRIAL CO., LTD. under the trade name of "Nocceler CZ") serving as a cross-linking accelerator, a guanidine-based accelerator (1,3-diphenylguanidine manufactured by OUCHI SHINKO CHEMICAL INDUSTRIAL CO.,LTD. under the trade name of "Nocceler D") serving as a cross-linking accelerator, and an aromatic amine-based anti-aging agent (N-phenyl-N'-(1,3-dimethylbutyl)-p-phenylenediamine manufactured by OUCHI SHINKO CHEMICAL INDUSTRIAL CO., LTD. under the trade name of "NOCRAC 6C"), which is an anti-aging agent, were kneaded instead of kneading the rubber composition in the form of containing no cross-linking agent for rubber and dicumyl peroxide serving as a cross-linking agent for rubber in the step of obtaining a rubber composition in the form of containing a cross-linking agent for rubber, and that the amounts of components used were adjusted to achieve the composition described in Table 7.

(Example 19)

A sheet-shaped cross-linked rubber composition was obtained in the same manner as in Example 15, except that natural rubber (NR: RSS3 Grade, made in Thailand) was used instead of the styrene butadiene rubber (manufactured by Zeon Corporation under the trade name of "Nipol 1502", hereinafter sometimes referred to as "SBR").

(Comparative Example 13)

A sheet-shaped cross-linked rubber composition was obtained in the same manner as in Example 15, except that no thermoplastic polymer composition was used, and that the amounts of components used were adjusted to achieve the composition described in Table 8.

(Comparative Example 14)

A sheet-shaped cross-linked rubber composition was obtained in the same manner as in Example 15, except that no thermoplastic polymer composition was used, that an aroma oil (manufactured by ENEOS Corporation (formerly "JXTG Nippon Oil & Energy Corporation") under the trade name of "T-DAE oil") was added together with the powder material at the timing of addition of the powder material, and that the amounts of components used were adjusted to achieve the composition described in Table 8.

(Comparative Example 15)

A sheet-shaped cross-linked rubber composition was obtained in the same manner as in Example 19, except that no thermoplastic polymer composition was used, and that the amounts of components used were adjusted to achieve the composition described in Table 8.

(Comparative Example 16)

A sheet-shaped cross-linked rubber composition was obtained in the same manner as in Example 19, except that no thermoplastic polymer composition was used, that an aroma oil (manufactured by ENEOS Corporation (formerly "JXTG Nippon Oil & Energy Corporation") under the trade name of "T-DAE oil") was added together with the powder material at the timing of addition of the powder material, and that the amounts of components used were adjusted to achieve the composition described in Table 8.

(Comparative Example 17)

A sheet-shaped cross-linked rubber composition was obtained in the same manner as in Example 15, except that a styrenic thermoplastic elastomer (manufactured by Mitsubishi Chemical Corporation under the trade name of "T320C", JIS A hardness: 15) was used instead of the thermoplastic polymer composition, and that the amounts of components used were adjusted to achieve the composition described in Table 8.

(Comparative Example 18)

A sheet-shaped cross-linked rubber composition was obtained in the same manner as in Example 15, except that an olefinic thermoplastic elastomer (manufactured by Mitsui Chemicals, Inc. under the trade name of "Milastomer 6020NS", JIS A hardness: 50 (a value obtained by measuring the hardness 5 seconds after the contact of the pressure application plate)) was used instead of the thermoplastic polymer composition, and that the amounts of components used were adjusted to achieve the composition described in Table 8.

(Comparative Example 19)

A sheet-shaped cross-linked rubber composition was obtained in the same manner as in Example 19, except that an EBM (manufactured by Mitsui Chemicals, Inc. under the trade name of "TAFMER DF7350") was used instead of the thermoplastic polymer composition, and that the amounts of components used were adjusted to achieve the composition described in Table 8.

[Characterization of Cross-Linked Rubber Compositions Obtained in Examples 15 to 19 and Comparative Examples 13 to 19]

<Regarding Measurement of JIS-A Hardness, Percent Change in 100% Modulus, Percent Change in Breaking Strength, and Percent Change in Elongation at Break, as well as Presence or Absence of Oil Bleeding>

The cross-linked rubber compositions obtained in Examples 15 to 19 and Comparative Examples 13 to 19 were measured for the JIS-A hardness, the percent change in 100% modulus, the percent change in breaking strength, and the percent change in elongation at break, and checked for the presence or absence of oil bleeding, by employing the same methods as those employed in "Characterization of Cross-Linked Rubber Compositions Obtained in Examples 9 to 14 and Comparative Examples 7 to 12" described above. Tables 7 and 8 show the obtained results.

[Table 7]

| | | | Example 15 | Example 18 | Example 17 | Example 18 | Example 19 |
|---|---|---|---|---|---|---|---|
| Composition (parts by mass) | Uncross-Linked Rubber | SBR | 100 | 100 | 100 | 100 | - |
| | | NR | - | - | - | - | 100 |
| | Thermoplastic Polymer Composition | TPC (1): Synthesis Example 1 | 50 | - | - | - | 50 |
| | | TPC (2): Synthesis Example 2 | - | 50 | - | - | - |
| | | TPC (3): Synthesis Example 3 | - | - | 50 | - | - |
| | | TPC (5): Synthesis Example 5 | - | - | - | 50 | - |
| | Powder Material | Zinc Oxide | 3 | 3 | 3 | 3 | 3 |
| | | Stearic Acid | 1 | 1 | 1 | 1 | 1 |
| | Cross-Linking Agent for Rubber | Sulfur | 2.00 | 2.00 | 2.00 | 2.00 | 2.00 |
| | Cross-Linking Accelerator | Trade Name "Nocceler CZ" | 1.00 | 1.00 | 1.00 | 1.00 | 1.00 |
| | | Trade Name "Nocceler D" | 0.50 | 0.50 | 0.50 | 0.50 | 0.50 |
| | Anti-Aging Agent | Trade Name "NOCRAC 6C" | 1.00 | 1.00 | 1.00 | 1.00 | 1.00 |
| Results of Cha racterization of Cross-Linked Ru racterization Composition | | JIS-A Hardness | 36 | 35 | 39 | 43 | 33 |
| | | Absolute Value of Percent Change in 100% Mod (%) | 9.4 | 7.6 | 9.7 | 8.2 | 10.2 |
| | | Absolute Value of Percent Change in Breaking Strength (%) | 8.9 | 9.7 | 8.8 | 9.2 | 8.9 |
| | | Absolute Value of Percent Change in Elongation at Break (%) | 7.9 | 6.7 | 7.6 | 6.9 | 8.3 |
| | | Presence or Absence of Oil Bleeding | Absent | Absent | Absent | Absent | Absent |

[Table 8]

| | | | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|---|
| Composition (parts by mass) | Uncross-Linked Rubber | SBR | 100 | 100 | - | - | 100 | 100 | - |
| | | NR | - | - | 100 | 100 | - | - | 100 |
| | Component for Comparison with Thermoplastic Polymer Composition | Styrenic Thermoplastic Elastomer | - | - | - | - | 50 | 50 | - |
| | | Olefinic Thermoplastic Elastomer | - | - | - | - | - | | - |
| | | EBM | - | - | - | - | - | - | 50 |
| | Powder Material | Zinc Oxide | 3 | 3 | 3 | 3 | 3 | 3 | 3 |
| | | Stearic Acid | 1 | 1 | 1 | 1 | 1 | 1 | 1 |
| | Additive | Aroma Oil | - | 50 | - | 50 | - | - | - |
| | Cross-Linking Agent for Rubber | Sulfur | 2.00 | 2.00 | 2.00 | 2.00 | 2.00 | 2.00 | 2.00 |
| | Cross-Linking Accelerator | Trade Name "Nocceler CZ" | 1.00 | 1.00 | 1.00 | 1.00 | 1.00 | 1.00 | 1.00 |
| | | Trade Name "Nocceler D" | 0.50 | 0.50 | 0.50 | 0.50 | 0.50 | 0.50 | 0.50 |
| | Anti-Aging Agent | Trade Name "NOCRAC 6C" | 1.00 | 1.00 | 1.00 | 1.00 | 1.00 | 1.00 | 1.00 |

(continued)

| | | Comparative Example 13 | Comparative Example 14 | Comparative Example 15 | Comparative Example 16 | Comparative Example 17 | Comparative Example 18 | Comparative Example 19 |
|---|---|---|---|---|---|---|---|---|
| Results of Characterization of Cross-Linked Rubber Composition | JIS-A Hardness | 46 | 34 | 41 | 31 | 35 | 44 | 38 |
| | Absolute Value of Percent Change in 100% Mod (%) | 23.4 | 27.8 | 36 | 30 | 22.4 | 25.0 | 34 |
| | Absolute Value of Percent Change in Breaking Strength (%) | 23.6 | 24.7 | 25.9 | 26.7 | 23.6 | 24.7 | 23.4 |
| | Absolute Value of Percent Change in Elongation at Break (%) | 30.6 | 40.2 | 31.6 | 42.2 | 28.6 | 39.4 | 29.8 |
| | Presence or Absence of Oil Bleeding | Absent | Present | Absent | Present | Absent | Absent | Absent |

As is apparent from the results shown in Tables 7 and 8, each of the cross-linked rubber compositions obtained in Examples 15 to 18, which were systems using an SBR as the uncross-linked rubber, did not undergo oil bleeding, and further had a hardness of 43 or lower. In addition, the value of the percent change in 100% modulus before and after the heat aging test of each of the cross-linked rubber compositions obtained in Examples 15 to 18, which were systems using an SBR as the uncross-linked rubber, was 9.7% or lower as measured by the absolute value.

In contrast, first, the cross-linked rubber composition obtained in Comparative Example 13, which was a system using an SBR as the uncross-linked rubber, had a hardness of 46. In addition, the value of the percent change in 100% modulus before and after the heat aging test of the cross-linked rubber composition obtained in Comparative Example 13 was 23.4% as measured by the absolute value. Note that since the cross-linked rubber compositions obtained in Examples 15 to 18 were different from the cross-linked rubber composition obtained in Comparative Example 13 in terms of the presence or absence of the use of a thermoplastic polymer composition, a comparison therebetween showed that, in the cases (Examples 15 to 18) where one of the thermoplastic polymer compositions TPCs (1) to (3) and (5) was used, it was possible to further lower the hardness, and to obtain a sufficiently low hardness with such rubber systems, and also it was possible to further improve the heat aging resistance based on the percent change in 100% modulus before and after the heat aging test.

In addition, the cross-linked rubber composition obtained in Comparative Example 14 was different from the composition obtained in Comparative Example 13 in that 50 parts by mass of the aroma oil was contained. A compositional comparison therebetween showed that when an aroma oil was used as in the cross-linked rubber composition obtained in Comparative Example 14, it was possible to lower the hardness (actually, the value of the hardness was lowered by 12 points), but oil bleeding occurred. Such results of the cross-linked rubber composition obtained in Comparative Example 14 have shown that simply using an aroma oil did not make it possible to lower the hardness without occurrence of oil bleeding. In addition, the value of the percent change in 100% modulus before and after the heat aging test of the cross-linked rubber composition obtained in Comparative Example 14 was 27.8% as measured by the absolute value, and it was also found that the cross-linked rubber composition obtained in Comparative Example 14 had a lower heat aging resistance than the cross-linked rubber composition obtained in Comparative Example 13.

In addition, the cross-linked rubber compositions obtained in Comparative Examples 17 and 18 were compositions using the component for comparison (thermoplastic elastomer), which was one of the styrenic thermoplastic elastomer and the olefinic thermoplastic elastomer, instead of the thermoplastic polymer composition. Because of the use of such a component for comparison (thermoplastic elastomer), the cross-linked rubber compositions obtained in Comparative Examples 17 and 18 had a lower hardness than the cross-linked rubber composition obtained in Comparative Example 13. Here, a comparison between the cross-linked rubber compositions obtained in Examples 15 to 18 and the cross-linked rubber compositions obtained in Comparative Examples 17 and 18, which were compositionally different in that the component for comparison (thermoplastic elastomer) was used in Comparative Examples 17 to 18 instead of the thermoplastic polymer composition, showed that when such a component for comparison was used, it was not possible to sufficiently obtain an effect of improving the heat aging resistance based on the percent change in 100% modulus before and after the heat aging test in comparison with the cases where a thermoplastic polymer composition was used.

From such results (the results shown in Tables 7 and 8), it was found that the cross-linked rubber compositions obtained in Examples 15 to 18, which were systems using an SBR as the uncross-linked rubber, made it possible to obtain a sufficiently low hardness and also sufficiently suppress the occurrence of oil bleeding, and moreover to further improve the heat aging resistance. Note that the composition was prepared by using the anti-aging agent in an amount of 1.0 parts by mass relative to 100 parts by mass of the SBR in each of Examples 15 to 18 and Comparative Examples 13, 14, 17 and 18, and a comparison among these systems, in which the equal amount of the anti-aging agent was contained, showed that the heat aging resistance of the cross-linked rubber compositions obtained in Examples 15 to 18 was improved as described above.

Moreover, as is apparent from the results shown in Tables 7 and 8, the cross-linked rubber composition obtained in Example 19, which was a system using an NR as the uncross-linked rubber, did not undergo oil bleeding, and further had a hardness of 33. In addition, the value of the percent change in 100% modulus before and after the heat aging test of each of the cross-linked rubber composition obtained in Example 19, which was a system using an NR as the uncross-linked rubber, was 10.2% as measured by the absolute value.

In contrast, first, the cross-linked rubber composition obtained in Comparative Example 15, which was a system using an NR as the uncross-linked rubber, had a hardness of 41. In addition, the value of the percent change in 100% modulus before and after the heat aging test of the cross-linked rubber composition obtained in Comparative Example 15 was 25.9% as measured by the absolute value. Note that since the cross-linked rubber composition obtained in Example 19 was different from the cross-linked rubber composition obtained in Comparative Example 15 in terms of the presence or absence of the use of the thermoplastic polymer composition (TPC (1)), a comparison therebetween showed that it was possible to further lower the hardness of the cross-linked rubber composition, and also to further improve the heat aging resistance, in the case (Example 19) where the TPC (1) was used.

In addition, the cross-linked rubber composition obtained in Comparative Example 16 was different from the composition obtained in Comparative Example 15 in that the composition contained 50 parts by mass of the aroma oil. A compositional comparison therebetween showed that when an aroma oil was used as in the cross-linked rubber composition obtained in Comparative Example 16, it was possible to lower the hardness (actually, the value of the hardness was lowered by 10 points), but oil bleeding occurred. Such results of the cross-linked rubber composition obtained in Comparative Example 16 showed that simply using an aroma oil did not make it possible to lower the hardness without occurrence of oil bleeding.

In addition, the cross-linked rubber composition obtained in Comparative Example 19, which was a system using an NR as the uncross-linked rubber, was compositionally different from the cross-linked rubber composition obtained in Example 19 in that the EBM was used as the component for comparison instead of the TPC (1). The cross-linked rubber composition obtained in Comparative Example 19 had a hardness of 38, and the value of the percent change in 100% modulus before and after the heat aging test of the cross-linked rubber composition was 34% as measured by the absolute value. Here, a comparison between the cross-linked rubber composition obtained in Example 19 and the cross-linked rubber composition obtained in Comparative Example 19 showed that it was possible to further lower the hardness of the cross-linked rubber composition and also to further improve the heat aging resistance in the case (Example 19) where the TPC (1) was used in comparison with the case (Comparative Example 19) where the EBM was used as the component for comparison.

From such results (the results shown in Tables 7 and 8), it was found that the cross-linked rubber composition obtained in Example 19, which was a system using an NR as the uncross-linked rubber, made it possible to further lower the hardness and also sufficiently suppress the occurrence of oil bleeding, and moreover to further improve the heat aging resistance. Note that, in each of Example 19 and Comparative Examples 15, 16, and 19, the composition was prepared by using 1.0 parts by mass of the anti-aging agent relative to 100 parts by mass of the NR. A comparison among these systems, in which the equal amount of the anti-aging agent was contained, also showed that the heat aging resistance of the cross-linked rubber composition obtained in Example 19 was improved as described above.

Moreover, the value of the percent change in breaking strength before and after the heat aging test of each of the cross-linked rubber compositions obtained in Examples 15 to 19 was 9.7% or lower as measured by the absolute value, whereas the value of the percent change in breaking strength before and after the heat aging test of each of the cross-linked rubber compositions obtained in Comparative Examples 13 to 19 was 22.5% or higher as measured by the absolute value. In addition, the value of the percent change in elongation at break before and after the heat aging test of each of the cross-linked rubber compositions obtained in Examples 15 to 19 was 8.3% or lower as measured by the absolute value, whereas the value of the percent change in elongation at break before and after the heat aging test of the cross-linked rubber compositions obtained in Comparative Examples 13 to 19 was 28.6% or higher as measured by the absolute value. Also from such results of the percent change in breaking strength and the percent change in elongation at break showed that it was found that in either a case where the cross-linked rubber compositions obtained in Examples 15 to 18 were compared with the cross-linked rubber compositions obtained in Comparative Examples 13 and 14 and 17 and 18 or a case where the cross-linked rubber composition obtained in Example 19 was compared with the cross-linked rubber compositions obtained in Comparative Examples 15, 16, and 19, the cross-linked rubber compositions obtained in Examples were higher in heat aging resistance than the cross-linked rubber compositions obtained in Comparative Examples.

(Examples 20 and 21)

A sheet-shaped cross-linked rubber composition was obtained in each of the examples in the same manner as in Example 1, except that a styrene butadiene rubber (manufactured by Zeon Corporation under the trade name of "Nipol 1502", hereinafter sometimes referred to as "SBR") was used instead of the EPDM, that the type of the thermoplastic polymer composition was changed and one of the thermoplastic polymer compositions obtained in Synthesis Examples 7 and 8 (TPCs (7) and (8)) was used, that silica (manufactured by TOSOH SILICA CORPORATION under the trade name of "AQ") was used instead of the carbon black, that an aroma oil (manufactured by ENEOS Corporation under the trade name of "T-DAE oil") was used instead of the paraffin oil, that a half (1/2) of the powder material, the entire aroma oil, and a silane coupling agent (manufactured by Evonik Industries AG under the trade name of "Si-69") were added instead of adding a half (1/2) of the powder material and the entire paraffin oil, that the rubber composition in the form of containing no cross-linking agent for rubber, sulfur (oil-treated sulfur manufactured by Tsurumi Chemical Industry Co., ltd. under the trade name of "Kinka-Jirushi oil-containing fine-powder sulfur") serving as a cross-linking agent for rubber, a sulfenamide-based accelerator (N-cyclohexyl-2-benzothiazylsulfenamide manufactured by OUCHI SHINKO CHEMICAL INDUSTRIAL CO.,LTD. under the trade name of "Nocceler CZ") serving as a cross-linking accelerator, a guanidine-based accelerator (1,3-diphenylguanidine manufactured by OUCHI SHINKO CHEMICAL INDUSTRIAL CO.,LTD. under the trade name of "Nocceler D") serving as a cross-linking accelerator, an aromatic amine-based anti-aging agent (N-phenyl-N'-(1,3-dimethylbutyl)-p-phenylenediamine manufactured by OUCHI SHINKO CHEMICAL INDUSTRIAL CO., LTD. under the trade name of "NOCRAC 6C"), which is an anti-aging agent, were kneaded instead of kneading the rubber composition in the form of containing no cross-linking agent for rubber and dicumyl peroxide serving as a cross-linking agent for rubber in the step of obtaining a rubber composition in the form of containing a cross-linking agent for rubber, and that the amounts of components used were adjusted to achieve the composition described in Table 9.

(Comparative Example 20)

A sheet-shaped cross-linked rubber composition was obtained in the same manner as in Example 20, except that a styrenic thermoplastic elastomer (manufactured by Asahi Kasei Corporation under the trade name of "M1943", JIS A hardness: 67) was used instead of the thermoplastic polymer composition, and that the amounts of components used were adjusted to achieve the composition described in Table 9.

[Characterization of Cross-Linked Rubber Compositions Obtained in Examples 20 and 21 and Comparative Example 20]

<Regarding Measurement of JIS-A Hardness>

The cross-linked rubber compositions obtained in Examples 20 and 21 and Comparative Example 20 were measured for JIS-A hardness by employing the same method as that employed in "Characterization of Cross-Linked Rubber Compositions Obtained in Examples 1 to 8 and Comparative Examples 1 to 6" described above. Table 9 shows the obtained results.

<Measurement of Loss Tangent (tan6) which is Index Related to viscoelasticity>

Each of the sheet-shaped cross-linked rubber compositions (rubber sheets) obtained in Examples 20 and 21 and Comparative Example 20 was measured for $\tan\delta$ at 0°C and tan6 at 60°C in accordance with JIS K-6394 (published in 2007). Specifically, by using a viscoelasticity-measuring device (manufactured by UBM under the trade name of "REOGEL E-4000"), the rubber sheet was measured in accordance with JIS K 6394 under conditions of a strain of 20 $\mu$m (0.1%) and a frequency of 10 Hz while the measuring temperature was being changed from -10°C to 60°C, to thereby determine $\tan\delta$ at 0°C [tan6 (0°C)] and $\tan\delta$ at 60°C [$\tan\delta$ (60°C)]. From the measured values, the balance therebetween ($\tan\delta$ (0°C)/$\tan\delta$ (60°C)) was determined. Table 9 shows the measurement results. Note that the values of $\tan\delta$ (0°C) and $\tan\delta$ (60°C) shown in Table 9 are relative values where the values of $\tan\delta$ (0°C) and $\tan\delta$ (60°C) of the sheet-shaped cross-linked rubber composition (rubber sheet) obtained in Comparative Example 20 are each converted to 100. Note that when a tire is manufactured, it can be said that the larger the numeric value of the $\tan\delta$ under a condition of a measuring temperature of 0°C is, the better the wet grip property is, and it can be said that the smaller the numeric value of the $\tan\delta$ under a condition of a measuring temperature of 60°C is, the better the fuel economy (rolling resistance) is.

[Table 9]

| | | | Example 20 | Example 21 | Comparative Example 20 |
|---|---|---|---|---|---|
| Composition (parts by mass) | Uncross-Linked Rubber | SBR | 80 | 80 | 80 |
| | Thermoplastic Polymer Composition | TPC (7): Synthesis Example 7 | 20 | - | - |
| | | TPC (8): Synthesis Example 8 | - | 20 | - |
| | Component for Comparison with Thermoplastic Polymer Composition | Styrenic Thermoplastic Elastomer | - | - | 20 |
| | Powder Material | Silica | 55.0 | 55.0 | 55.0 |
| | | Zinc Oxide | 3.0 | 3.0 | 30 |
| | | Stearic Acid | 1.0 | 1.0 | 1.0 |
| | Silane Coupling Agent | Trade Name "Si69" | 4.4 | 4.4 | 4.4 |
| | Oil | Aroma Oil | 7.5 | 7.5 | 7.5 |
| | Cross-Linking Agent for Rubber | Sulfur | 1.0 | 1.0 | 1.0 |
| | Cross-Linking Accelerator | Trade Name "Nocceler CZ" | 2.3 | 2.3 | 2.3 |
| | | Trade Name "Nocceler D" | 1.1 | 1.1 | 1.1 |
| | Anti-Aging Agent | Trade Name "NOCRAC 6C" | 1.0 | 1.0 | 1.0 |
| Results of Characterization of Cross-Linked Rubber Composition | | JIS-A Hardness | 64 | 65 | 68 |
| | | $\tan\delta$ 0°C (Index with Reference to Comparative Example 20) | 118 | 108 | 100 |
| | | $\tan\delta$ 60°C (Index with Reference to Comparative Example 20) | 94 | 95 | 100 |
| | | $\tan\delta$ 0°C/$\tan\delta$ 60°C (index with Reference to Comparative Example 20) | 124 | 113 | 100 |

As is apparent from the results shown in Table 9, the cross-linked rubber compositions obtained in Examples 20 and 21 are different from the cross-linked rubber composition obtained in Comparative Example 20 only in that a thermoplastic polymer composition was used in Examples 20 and 21, whereas the component for comparison with the thermoplastic polymer compositions was used in Comparative Example 20. Here, a comparison therebetween showed that the hardness was further lowered in the cases (Examples 20 and 21) where one of the thermoplastic polymer compositions TPCs (7) and (8) was used in comparison with the case where the styrenic thermoplastic elastomer was used. For this reason, it was found that a rubber system using a thermoplastic polymer composition as described in Examples 20 and 21 makes it possible to obtain a sufficiently low hardness.

Moreover, it was found that the cross-linked rubber compositions obtained in Examples 20 and 21, in which a thermoplastic polymer composition was used, had a larger value of $\tan\delta$ (0°C) and a smaller value of tan6 (60°C) than that in the case (Comparative Example 20) where the styrenic thermoplastic elastomer was used, and the balance therebetween ($\tan\delta$ (0°C)/$\tan\delta$ (60°C)) was higher in Examples 20 and 21 than in Comparative Example 20.

(Examples 22 and 23)

A sheet-shaped cross-linked rubber composition was obtained in each of the examples in the same manner as in Example 20, except that the type of the thermoplastic polymer composition was changed to use one of the thermoplastic polymer compositions (TPCs (9) and (10)) obtained in Synthesis Examples 9 and 10, that no aroma oil was used, and that the amounts of components used were adjusted to achieve the composition described in Table 10.

(Comparative Examples 21 and 22)

A sheet-shaped cross-linked rubber composition was obtained in each of the comparative examples in the same manner as in Example 20, except that no thermoplastic polymer composition was used, and that the amounts of components used were adjusted to achieve the composition described in Table 10.

[Characterization of Cross-Linked Rubber Compositions Obtained in Examples 22 and 23 and Comparative Examples 21 and 22]

<Regarding measurement of JIS-A hardness and loss tangent (tan$\delta$)>

The cross-linked rubber compositions obtained in Examples 22 and 23 and Comparative Examples 21 and 22 were measured for JIS-A hardness and loss tangent (tan$\delta$) by employing the same methods as those employed in "Characterization of Cross-Linked Rubber Compositions Obtained in Examples 20 and 21 and Comparative Example 20" described above. Table 10 shows the obtained results. Note that the values of tan$\delta$ (0°C) and tan$\delta$ (60°C) shown in Table 10 are relative values where the values of tan$\delta$ (0°C) and tan$\delta$ (60°C) of the sheet-shaped cross-linked rubber composition (rubber sheet) obtained in Comparative Example 21 are each converted to 100.

[Table 10]

| | | | Example 22 | Example 23 | Comparative Example 21 | Comparative Example 22 |
|---|---|---|---|---|---|---|
| Composition (parts by mass) | Uncross-Linked Rubber | SBR | 100 | 100 | 100 | 100 |
| | Thermoplastic Polymer Composition | TPC (9): Synthesis Example 9 (Liquid Composition) | 15 | - | - | - |
| | | TPC (10): Synthesis Example 10 (Liquid Composition) | | 15 | | |
| | Powder Material | Silica | 60 | 60 | 60 | 60 |
| | | Zinc Oxide | 3 | 3 | 3 | 3 |
| | | Stearic Acid | 1 | 1 | 1 | 1 |
| | Silane Coupling Agent | Trade Name "Si69" | 4.8 | 4.8 | 4.8 | 4.8 |
| | Oil | Aroma Oil | - | - | 5 | 15 |
| | Cross-Linking Agent for Rubber | Trade Name "Sulfur" | 1 | 1 | 1 | 1 |
| | Cross-Linking Accelerator | Trade Name "Nocceler CZ" | 2.3 | 2.3 | 2.3 | 2.3 |
| | | Trade Name "Nocceler D" | 1.1 | 1.1 | 1.1 | 1.1 |
| | Anti-Aging Agent | Trade Name "NOCRAC 6C" | 1 | 1 | 1 | 1 |

(continued)

|  | | Example 22 | Example 23 | Comparative Example 21 | Comparative Example 22 |
|---|---|---|---|---|---|
| Results of Characterization of Cross-Linked Rubber Composition | JIS-A Hardness | 62 | 61 | 65 | 63 |
| | tanδ 0°C (Index with Reference to Comparative Example 21) | 112 | 110 | 100 | 105 |
| | tanδ 60°C (Index with Reference to Comparative Example 21) | 96 | 94 | 100 | 107 |
| | tanδ 0°C/tanδ 60°C (Index with Reference to Comparative Example 21) | 117 | 117 | 100 | 98 |

As is apparent from the results shown in Table 10, when the cross-linked rubber compositions obtained in Examples 22 and 23 are compositionally compared with the cross-linked rubber compositions obtained in Comparative Examples 21 and 22, they are compositionally different in that the aroma oil was used in Comparative Examples 21 and 22 instead of the thermoplastic polymer composition used in Examples 22 and 23. Here, a comparison therebetween showed that the hardness took a lower value in the cases (Examples 22 and 23) where one of the thermoplastic polymer compositions TPCs (9) and (10) was used in comparison with the case where the "aroma oil" was used instead of the thermoplastic polymer composition. For this reason, it has been found that a rubber system using a thermoplastic polymer composition as in Examples 22 and 23 makes it possible to obtain a sufficiently low hardness.

Moreover, it was also found that the cross-linked rubber compositions obtained in Examples 22 and 23, in which a thermoplastic polymer composition was used, had larger values of tan6 (0°C) and smaller values of tan6 (60°C) than those in the cases (Comparative Examples 21 and 22) in which a styrenic thermoplastic elastomer was used, and also that the balance therebetween (tanδ (0°C)/tanδ (60°C)) was higher in Examples 22 and 23 than in Comparative Examples 21 and 22.

(Example 24)

A sheet-shaped cross-linked rubber composition was obtained in the same manner as in Example 1, except that a styrene butadiene rubber (manufactured by Zeon Corporation under the trade name of "Nipol 1502", hereinafter sometimes referred to as "SBR") was used instead of the EPDM, that the type of the thermoplastic polymer composition was changed to use the thermoplastic polymer composition (TPC (11)) obtained in Synthesis Example 11, that silica (manufactured by TOSOH SILICA CORPORATION under the trade name of "AQ") was used instead of the carbon black, that an aroma oil (manufactured by ENEOS Corporation under the trade name of "T-DAE oil") was used instead of the paraffin oil, that a powder material consisting of a powder mixture of the silica, zinc oxide, stearic acid, and an anti-aging agent (aromatic amine-based anti-aging agent: N-phenyl-N'-(1,3-dimethylbutyl)-p-phenylenediamine manufactured by OUCHI SHINKO CHEMICAL INDUSTRIAL CO., LTD. under the trade name of "NOCRAC 6C") was prepared instead of preparing the powder material made of the powder mixture of carbon black, zinc oxide, and stearic acid, that a half (1/2) of the powder material, the entire aroma oil, and a silane coupling agent (manufactured by Evonik Industries AG under the trade name of "Si-69") were added instead of adding a half (1/2) of the powder material and the entire paraffin oil, that the rubber composition in the form of containing no cross-linking agent for rubber, sulfur (oil-treated sulfur manufactured by Tsurumi Chemical Industry Co., ltd. under the trade name of "Kinka-Jirushi oil-containing fine-powder sulfur") serving as a cross-linking agent for rubber, a sulfenamide-based accelerator (N-cyclohexyl-2-benzothiazylsulfenamide manufactured by OUCHI SHINKO CHEMICAL INDUSTRIAL CO.,LTD. under the trade name of "Nocceler CZ") serving as a cross-linking accelerator, and a guanidine-based accelerator (1,3-diphenylguanidine manufactured by OUCHI SHINKO CHEMICAL INDUSTRIAL CO.,LTD. under the trade name of "Nocceler D") serving as a cross-linking accelerator were kneaded instead of kneading the rubber composition in the form of containing no cross-linking agent for rubber and dicumyl peroxide serving as a cross-linking agent for rubber in the step of obtaining a rubber composition in the form of containing a cross-linking agent for rubber, and that the amounts of components used were adjusted to achieve the composition described in Table 11.

(Comparative Example 23)

A sheet-shaped cross-linked rubber composition was obtained in the same manner as in Example 24, except that a styrenic thermoplastic elastomer (manufactured by Asahi Kasei Corporation under the trade name of "Tuftec H1052", JIS A hardness: 67) was used instead of the thermoplastic polymer composition, and that the amounts of components used were adjusted to achieve the composition described in Table 11.

[Characterization of Cross-Linked Rubber Composition Obtained in Example 24 and Comparative Example 23]

<Regarding Measurement of JIS-A Hardness and Loss Tangent (tan6)>

The cross-linked rubber compositions obtained in Example 24 and Comparative Example 23 were measured for JIS-A hardness and loss tangent (tan$\delta$) by employing the same methods as those employed in "Characterization of Cross-Linked Rubber Compositions Obtained in Examples 20 and 21 and Comparative Example 20" described above. Table 11 shows the obtained results. Note that the values of tan6 (0°C) and tan$\delta$ (60°C) shown in Table 11 are relative values where the values of tan6 (0°C) and tan$\delta$ (60°C) of the sheet-shaped cross-linked rubber composition (rubber sheet) obtained in Comparative Example 23 are each converted to 100.

<Measurement of Percent Change in 100% Modulus>

Using each of the cross-linked rubber compositions obtained in Example 24 and Comparative Example 23, in accordance with JIS K6251 (published in 2010), a No. 3 dumbbell-shaped test piece was prepared and a tensile test was carried out at a tensile speed of 500 mm/min, to thereby measure the 100% modulus (M100) [MPa]. Table 11 shows the obtained results.

[Table 11]

| | | | Example 24 | Comparative Example 23 |
|---|---|---|---|---|
| Composition (parts by mass) | Uncross-Linked Rubber | SBR | 80 | 80 |
| | Thermoplastic Polymer Composition | TPC (11): Synthesis Example 11 | 20 | - |
| | Component for Comparison with Thermoplastic Polymer Composition | Styrenic Thermoplastic Elastomer | - | 20 |
| | Powder Material | Silica | 55 | 55 |
| | | Zinc Oxide | 3 | 3 |
| | | Stearic Acid | 1 | 1 |
| | | Anti-Aging Agent (Trade Name "NOCRAC 6C") | 1 | 1 |
| | Silane Coupling Agent | Trade Name "Si69" | 4.4 | 4.4 |
| | Oil | Aroma Oil | 7.5 | 7.5 |
| | Cross-Linking Agent for Rubber | Trade Name "Sulfur" | 1.0 | 1.0 |
| | Cross-Linking Accelerator | Trade Name "Noceler CZ" | 2.3 | 2.3 |
| | | Trade Name "Noceler D" | 1.1 | 1.1 |

(continued)

| Results of Characterization of Cross-Linked Rubber Composition | | Example 24 | Comparative Example 23 |
|---|---|---|---|
| | JIS-A Hardness | 66 | 68 |
| | tanδ 0°C (Index with Reference to Comparative Example 23) | 104 | 100 |
| | tanδ 60°C (Index with Reference to Comparative Example 23) | 96 | 100 |
| | tanδ 0°C/tanδ 60°C (Index with Reference to Comparative Example 23) | 108 | 100 |
| | 1 00% Mod (Unit: MPa) | 2.26 | 3.06 |

As is apparent from the results shown in Table 11, the cross-linked rubber composition obtained in Example 24 was different from the cross-linked rubber composition obtained in Comparative Example 23 only in that a thermoplastic polymer composition was used in Example 24, whereas a component for comparison with the thermoplastic polymer composition was used in Comparative Example 23. Here, a comparison therebetween showed that the hardness was lowered more in the case (Example 24) where a thermoplastic polymer composition was used than in the case (Comparative Example 23) where a styrenic thermoplastic elastomer was used. Note that the values of 100% modulus indicated that the flexibility was higher in the case (Example 24) where a thermoplastic polymer composition was used than in the case (Comparative Example 23) where a styrenic thermoplastic elastomer was used. From such results, it has been found that a rubber system using a thermoplastic polymer composition as described in Example 24 makes it possible to obtain a sufficiently low hardness.

Moreover, the cross-linked rubber composition obtained in Example 24 in which a thermoplastic polymer composition was used had a larger value of tanδ (0°C) and also a smaller value of tanδ (60°C) than that in the case (Comparative Example 23) where a styrenic thermoplastic elastomer was used had, and it was found that the balance therebetween (tanδ (0°C)/tanδ (60°C)) was higher in Example 24 than in Comparative Example 23.

[Industrial Applicability]

As described above, according to the present invention, it is possible to provide a rubber composition that, after cross-linking (after vulcanization), can be sufficiently prevented from the occurrence of oil bleeding, while having a sufficiently low hardness, and moreover can exhibit an excellent heat aging resistance, as well as a cross-linked rubber composition that is a cross-linking reaction product of the above-described rubber composition. After cross-linked, such a rubber composition of the present invention can exhibit excellent properties as described above, and hence is useful as a material for daily necessities, automotive parts (for example, rubber parts in engine rooms such as hoses, belts, bushings, and mounts), electrical appliances, industrial parts, rubber parts for building materials, sound insulation rubber, rubber for automotive interior materials (instrument panels and the like), and rubber for tires, and the like.

**Claims**

1.  A rubber composition, comprising:

    an uncross-linked rubber having no hydrogen-bond cross-linkable moiety;
    at least one polymer component selected from the group consisting of polymers (A) each of which has a side chain (a) containing a hydrogen-bond cross-linkable moiety having a carbonyl-containing group and/or a nitrogen-containing heterocycle and has a glass-transition point of 25°C or below and polymers (B) each of which contains a hydrogen-bond cross-linkable moiety and a covalent-bond cross-linking moiety in a side chain and has a glass-transition point of 25°C or below, wherein
    an amount of the polymer component contained is 0.01 to 200 parts by mass relative to 100 parts by mass of the uncross-linked rubber, and
    the polymers (A) and the polymers (B) are each a reaction product of a maleic anhydride graft-modified thermoplastic polymer having a maleation ratio of 0.1 to 10% by mass and a cross-linkable compound.

2. The rubber composition according to claim 1, wherein the cross-linkable compound is a compound having at least one of a hydroxyl group, an amino group, an imino group, and a thiol group.

3. The rubber composition according to claim 1 or 2, wherein the maleic anhydride graft-modified thermoplastic polymer is a polyolefin-based polymer graft-modified with maleic anhydride and/or a diene-based polymer graft-modified with maleic anhydride.

4. The rubber composition according to any one of claims 1 to 3, wherein the maleic anhydride graft-modified thermoplastic polymer is a maleic anhydride graft-modified product of at least one thermoplastic polymer selected from the group consisting of polypropylene, polyethylene, ethylene-butene copolymer, ethylene-propylene copolymer, ethylene-octene copolymer, and ethylene-propylene-diene copolymer.

5. The rubber composition according to any one of claims 1 to 4, further comprising a clay.

6. The rubber composition according to any one of claims 1 to 5, wherein the uncross-linked rubber is at least one selected from the group consisting of diene-based rubbers having no hydrogen-bond cross-linkable moiety and hydrogenated products thereof.

7. The rubber composition according to any one of claims 1 to 6, wherein the uncross-linked rubber is at least one diene-based rubber selected from the group consisting of natural rubber, styrene-butadiene rubber, and ethylene-propylene-diene rubber.

8. A cross-linked rubber composition which is a cross-linking reaction product of the rubber composition according to any one of claims 1 to 7, and which has a type A durometer hardness of 0 to 70 as measured under a temperature condition of 20±5°C in accordance with JIS K6253-3: 2012.

## INTERNATIONAL SEARCH REPORT

| | International application No. |
| --- | --- |
| | PCT/JP2021/023251 |

**A. CLASSIFICATION OF SUBJECT MATTER**
C08L 21/00(2006.01)i; C08K 3/34(2006.01)i; C08L 15/00(2006.01)i; C08L 23/26(2006.01)i
FI: C08L21/00; C08L15/00; C08L23/26; C08K3/34
According to International Patent Classification (IPC) or to both national classification and IPC

**B. FIELDS SEARCHED**

Minimum documentation searched (classification system followed by classification symbols)
C08L21/00; C08K3/34; C08L15/00; C08L23/26

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2017-057322 A (JX ENERGY CORPORATION) 23 March 2017 (2017-03-23) claims, paragraphs [0288]-[0290], examples | 1-8 |
| X | WO 2017/047274 A1 (JX ENERGY CORPORATION) 23 March 2017 (2017-03-23) claims, paragraph [0330], examples | 1-8 |
| X | WO 2017/159786 A1 (JX ENERGY CORPORATION) 21 September 2017 (2017-09-21) claims, paragraphs [0299]-[0301], examples | 1-8 |
| A | JP 2018-087319 A (MITSUBISHI GAS CHEMICAL CO., INC.) 07 June 2018 (2018-06-07) paragraph [0055] | 1-8 |
| A | JP 2016-193970 A (JX ENERGY CORPORATION) 17 November 2016 (2016-11-17) claims, examples | 1-8 |

☐ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 August 2021 (04.08.2021) | 17 August 2021 (17.08.2021) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

| International application No. |
| --- |
| PCT/JP2021/023251 |

| Patent Documents referred in the Report | Publication Date | Patent Family | Publication Date |
| --- | --- | --- | --- |
| JP 2017-057322 A | 23 Mar. 2017 | (Family: none) | |
| WO 2017/047274 A1 | 23 Mar. 2017 | US 2019/0048178 A1 claims, paragraph [0365], examples EP 3351595 A1 CN 108026377 A KR 10-2018-0054594 A | |
| WO 2017/159786 A1 | 21 Sep. 2017 | US 2019/0085146 A1 claims, paragraph [0324], examples EP 3431533 A1 CN 108779280 A | |
| JP 2018-087319 A | 07 Jun. 2018 | US 2019/0352505 A1 paragraph [0116] EP 3543293 A1 CN 109983079 A KR 10-2019-0077333 A | |
| JP 2016-193970 A | 17 Nov. 2016 | US 2018/0079887 A1 claims, examples WO 2016/158205 A1 EP 3279270 A1 CN 107406683 A KR 10-2017-0133407 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019027022 A
- JP 5918878 B
- JP 2017206604 A
- WO 2020027109 A
- JP 2017057322 A
- JP 2017057393 A
- JP 2017057323 A
- WO 2018235961 A
- JP 2006131663 A
- JP 2016193970 A